# EUROPEAN PATENT APPLICATION

(11) **EP 4 462 868 A1**
(43) Date of publication of application: **13.11.2024**
(21) Application number: 23735163.0
(22) Date of filing: 03.01.2023
(51) Int. Cl.: H04W 36/00, H04W 36/30, H04W 16/28

(54) **METHOD AND APPARATUS FOR PROVIDING CELL CHANGE OPERATION**

(30) Priority: 03.01.2022 KR 20220000504; 27.12.2022 KR 20220185179
(71) Applicant: KT Corporation, Seongnam-si, Gyeonggi-do 13606 (KR)
(72) Inventor: HONG, Sung Pyo, Seongnam-si Gyeonggi-do 13606 (KR)
(74) Representative: Brevalex
(86) International application number: PCT/KR2023/000073
(87) International publication number: WO 2023/128731

(57) **Abstract**

Proposed in the present disclosure are a method and an apparatus for providing a control plane procedure in a cell change operation for a mobile communication terminal. The present embodiments may provide an apparatus and a method by which a terminal performs a cell change operation, the method comprising the steps of: receiving a higher layer message including one or more candidate target cell configuration information for an L1/L2-triggered mobility (LTM) operation; receiving a medium access control control element (MAC CE) instructing performance of the LTM operation to a target cell; and controlling an operation of a timer included in the upper layer message.

## Description

### Technical Field

The disclosure related to a method and device for providing a control plane procedure in a cell change operation for a mobile communication terminal.

### Background Art

The spread of small wireless communication devices, such as smartphones, is leading to an increase in the number of users. In particular, not only smartphones but also various modes of transportation, such as cars and airplanes, are equipped with wireless communication devices, making it possible to communicate while on the move.

When a wireless communication device moves, it switches from one cell coverage to another. The development of high-speed transportation such as vehicles further increases the need for cell switching.

This cell switching process is called handover. Typically, a user equipment (UE) in radio resource control. (RRC) connected state performs handover through RRC signaling. When handover is performed based on Layer 3 (L3) signaling, the handover procedure between the base station, core network entity, and UE becomes complicated and time-consuming.

This complexity makes it difficult to meet low-latency, high-speed movement requirements for post-5G communication. In particular, as high-speed movement becomes more common, there is a need for technology that can maintain user equipment quality while for performing communication at the beam level. Therefore, there is a need for technology that archieves low latency and reduce overhead and interruption time during handover.

### Detailed Description of the Invention

### Technical Problem

The disclosure provides a method and device for controlling a cell changing operation of a UE at a lower layer.

### Technical Solution

In an aspect, the disclosure may provide a method for performing a cell change operation by a user equipment (UE). The method may include receiving a higher layer message including one or more pieces of candidate target cell configuration information for an L1/L2-triggered mobility (LTM) operation, receiving a medium access control control element (MAC CE) indicating to perform the LTM operation to a target cell, and controlling an operation of a timer included in the higher layer message.

In another aspect, the disclosure may provide a method for controlling a cell change operation of a UE by a base station. The method may include transmitting, to the UE, a higher layer message including one or more pieces of candidate target cell configuration information for an L1/L2-triggered mobility (LTM) operation, determining to perform the LTM operation on a target cell based on an L1 measurement result, and transmitting, to a medium access control control element (MAC CE) indicating to perform the LTM operation to the target cell, wherein the UE controls a timer included in the higher layer message if the MAC CE is received.

In another aspect, the disclosure may provide a UE performing a cell change operation. The UE may include a receiver receiving a higher layer message including one or more pieces of candidate target cell configuration information for an L1/L2-triggered mobility (LTM) operation and receiving a medium access control control element (MAC CE) indicating to perform the LTM operation to a target cell, and a controller controlling an operation of a timer included in the higher layer message.

In another aspect, the disclosure may provide a base station controlling a cell change operation of a UE. The base station may include a transmitter, to a UE, transmitting a higher layer message including one or more pieces of candidate target cell configuration information for an L1/L2-triggered mobility (LTM) operation and a controller determining to perform the LTM operation on a target cell based on the L1 measurement result, wherein the transmitter further transmits, to the UE, a medium access control element (MAC CE) indicating to perform the LTM operation to the target cell. Here, there may be provided a base station that controls an operation of a timer included in a higher layer message if a MAC CE is received.

### Advantageous Effects

According to the embodiments, a cell changing operation of a UE may be controlled at a lower layer.

### Brief Description of Drawings

FIG. 1 is a view schematically illustrating an NR wireless communication system in accordance with embodiments of the present disclosure;
FIG. 2 is a view schematically illustrating a frame structure in an NR system in accordance with embodiments of the present disclosure.
FIG. 3 is a view for explaining resource grids supported by a radio access technology in accordance with embodiments of the present disclosure;
FIG. 4 is a view for explaining bandwidth parts supported by a radio access technology in accordance with embodiments of the present disclosure;
FIG. 5 is a view illustrating an example of a synchronization signal block in a radio access technology in accordance with embodiments of the present disclosure;
FIG. 6 is a signal diagram for explaining a random access procedure in a radio access technology in accordance with embodiments of the present disclosure;
FIG. 7 is a view for explaining CORESET;
FIG. 8 is a flowchart for describing operations of a UE according to an embodiment;
FIG. 9 is a flowchart for describing operations of a base station according to an embodiment;
FIG. 10 is a view illustrating an example of a downlink L2 structure for an LTM radio bearer;
FIG. 11 is a view illustrating an example of an uplink L2 structure for an LTM radio bearer;
FIG. 12 is a view illustrating another example of a downlink L2 structure for an LTM radio bearer;
FIG. 13 is a view illustrating another example of an uplink L2 structure for an LTM radio bearer;
FIG. 14 is a block diagram illustrating a UE according to an embodiment; and
FIG. 15 is a block diagram illustrating a base station according to an embodiment.

### Mode for Carrying out the Invention

Hereinafter, some embodiments of the present disclosure will be described in detail with reference to the accompanying illustrative drawings. In the drawings, like reference numerals are used to denote like elements throughout the drawings, even if they are shown on different drawings. Further, in the following description of the present disclosure, a detailed description of known functions and configurations incorporated herein will be omitted when it may make the subject matter of the present disclosure rather unclear. When the expression "include", "have", "comprise", or the like as mentioned herein is used, any other part may be added unless the expression "only" is used. When an element is expressed in the singular, the element may cover the plural form unless a special mention is explicitly made of the element.

In addition, terms, such as first, second, A, B, (A), (B) or the like may be used herein when describing components of the present disclosure. Each of these terminologies is not used to define an essence, order or sequence of a corresponding component but used merely to distinguish the corresponding component from other component(s).

In describing the positional relationship between components, if two or more components are described as being "connected", "combined", or "coupled" to each other, it should be understood that two or more components may be directly "connected", "combined", or "coupled" to each other, and that two or more components may be "connected", "combined", or "coupled" to each other with another component "interposed" therebetween. In this case, another component may be included in at least one of the two or more components that are "connected", "combined", or "coupled" to each other.

In the description of a sequence of operating methods or manufacturing methods, for example, the expressions using "after", "subsequent to", "next", "before", and the like may also encompass the case in which operations or processes are performed discontinuously unless "immediately" or "directly" is used in the expression.

Numerical values for components or information corresponding thereto (e.g., levels or the like), which are mentioned herein, may be interpreted as including an error range caused by various factors (e.g., process factors, internal or external impacts, noise, etc.) even if an explicit description thereof is not provided.

The wireless communication system in the present specification refers to a system for providing various communication services, such as a voice service and a data service, using radio resources. The wireless communication system may include a user equipment (UE), a base station, a core network, and the like.

Embodiments disclosed below may be applied to a wireless communication system using various radio access technologies. For example, the embodiments may be applied to various radio access technologies such as code division multiple access (CDMA), frequency division multiple access (FDMA), time division multiple access (TDMA), orthogonal frequency division multiple access (OFDMA), single-carrier frequency division multiple access (SC-FDMA), non-orthogonal multiple access (NOMA), or the like. In addition, the radio access technology may refer to respective generation communication technologies established by various communication organizations, such as 3GPP, 3GPP2, Wi-Fi, Bluetooth, IEEE, ITU, or the like, as well as a specific access technology. For example, CDMA may be implemented as a wireless technology such as universal terrestrial radio access (UTRA) or CDMA2000. TDMA may be implemented as a wireless technology such as global system for mobile communications (GSM)/general packet radio service (GPRS)/enhanced data rates for GSM evolution (EDGE). OFDMA may be implemented as a wireless technology such as IEEE (Institute of Electrical and Electronics Engineers) 802.11 (Wi-Fi), IEEE 802.16 (WiMAX), IEEE 802-20, evolved UTRA (E-UTRA), and the like. IEEE 802.16m is evolution of IEEE 802.16e, which provides backward compatibility with systems based on IEEE 802.16e. UTRA is a part of a universal mobile telecommunications system (UMTS). 3GPP (3rd-generation partnership project) LTE (long-term evolution) is a part of E-UMTS (evolved UMTS) using evolved-UMTS terrestrial radio access (E-UTRA), which adopts OFDMA in a downlink and SC-FDMA in an uplink. As described above, the embodiments may be applied to radio access technologies that have been launched or commercialized, and may be applied to radio access technologies that are being developed or will be developed in the future.

The UE used in the specification must be interpreted as a broad meaning that indicates a device including a wireless communication module that communicates with a base station in a wireless communication system. For example, the UE includes user equipment (UE) in WCDMA, LTE, NR, HSPA, IMT-2020 (5G or New Radio), and the like, a mobile station in GSM, a user terminal (UT), a subscriber station (SS), a wireless device, and the like. In addition, the UE may be a portable user device, such as a smart phone, or may be a vehicle, a device including a wireless communication module in the vehicle, and the like in a V2X communication system according to the usage type thereof. In the case of a machine-type communication (MTC) system, the UE may refer to an MTC terminal, an M2M terminal, or a URLLC terminal, which employs a communication module capable of performing machine-type communication.

A base station or a cell in the present specification refers to an end that communicates with a UE through a network and encompasses various coverage regions such as a Node-B, an evolved Node-B (eNB), a gNode-B, a low-power node (LPN), a sector, a site, various types of antennas, a base transceiver system (BTS), an access point, a point (e.g., a transmission point, a reception point, or a transmission/reception point), a relay node, a megacell, a macrocell, a microcell, a picocell, a femtocell, a remote radio head (RRH), a radio unit (RU), a small cell, and the like. In addition, the cell may be used as a meaning including a bandwidth part (BWP) in the frequency domain. For example, the serving cell may refer to an active BWP of a UE.

The various cells listed above are provided with a base station controlling one or more cells, and the base station may be interpreted as two meanings. The base station may be 1) a device for providing a megacell, a macrocell, a microcell, a picocell, a femtocell, or a small cell in connection with a wireless region, or the base station may be 2) a wireless region itself. In the above description 1), the base station may be the devices controlled by the same entity and providing predetermined wireless regions or all devices interacting with each other and cooperatively configuring a wireless region. For example, the base station may be a point, a transmission/reception point, a transmission point, a reception point, and the like according to the configuration method of the wireless region. In the above description 2), the base station may be the wireless region in which a user equipment (UE) may be enabled to transmit data to and receive data from the other UE or a neighboring base station.

In this specification, the cell may refer to coverage of a signal transmitted from a transmission/reception point, a component carrier having coverage of a signal transmitted from a transmission/reception point (or a transmission point), or a transmission/reception point itself.

An uplink (UL) refers to a scheme of transmitting data from a UE to a base station, and a downlink (DL) refers to a scheme of transmitting data from a base station to a UE. The downlink may mean communication or communication paths from multiple transmission/reception points to a UE, and the uplink may mean communication or communication paths from a UE to multiple transmission/reception points. In the downlink, a transmitter may be a part of the multiple transmission/reception points, and a receiver may be a part of the UE. In addition, in the uplink, the transmitter may be a part of the UE, and the receiver may be a part of the multiple transmission/reception points.

The uplink and downlink transmit and receive control information over a control channel, such as a physical downlink control channel (PDCCH) and a physical uplink control channel (PUCCH). The uplink and downlink transmit and receive data over a data channel such as a physical downlink shared channel (PDSCH) and a physical uplink shared channel (PUSCH). Hereinafter, the transmission and reception of a signal over a channel, such as PUCCH, PUSCH, PDCCH, PDSCH, or the like, may be expressed as "PUCCH, PUSCH, PDCCH, PDSCH, or the like is transmitted and received".

For the sake of clarity, the following description will focus on 3GPP LTE/LTE-A/NR (New Radio) communication systems, but technical features of the disclosure are not limited to the corresponding communication systems.

The 3GPP has been developing a 5G (5th-Generation) communication technology in order to meet the requirements of a next-generation radio access technology of ITU-R after studying 4G (4th-generation) communication technology. Specifically, 3GPP is developing, as a 5G communication technology, LTE-A pro by improving the LTE-Advanced technology so as to conform to the requirements of ITU-R and a new NR communication technology that is totally different from 4G communication technology. LTE-A pro and NR all refer to the 5G communication technology. Hereinafter, the 5G communication technology will be described on the basis of NR unless a specific communication technology is specified.

Various operating scenarios have been defined in NR in consideration of satellites, automobiles, new verticals, and the like in the typical 4G LTE scenarios so as to support an enhanced mobile broadband (eMBB) scenario in terms of services, a massive machine-type communication (mMTC) scenario in which UEs spread over a broad region at a high UE density, thereby requiring low data rates and asynchronous connections, and an ultra-reliability and low-latency (URLLC) scenario that requires high responsiveness and reliability and supports high-speed mobility.

In order to satisfy such scenarios, NR introduces a wireless communication system employing a new waveform and frame structure technology, a low-latency technology, a super-high frequency band (mmWave) support technology, and a forward compatible provision technology. In particular, the NR system has various technological changes in terms of flexibility in order to provide forward compatibility. The primary technical features of NR will be described below with reference to the drawings.

### <Overview of NR System>

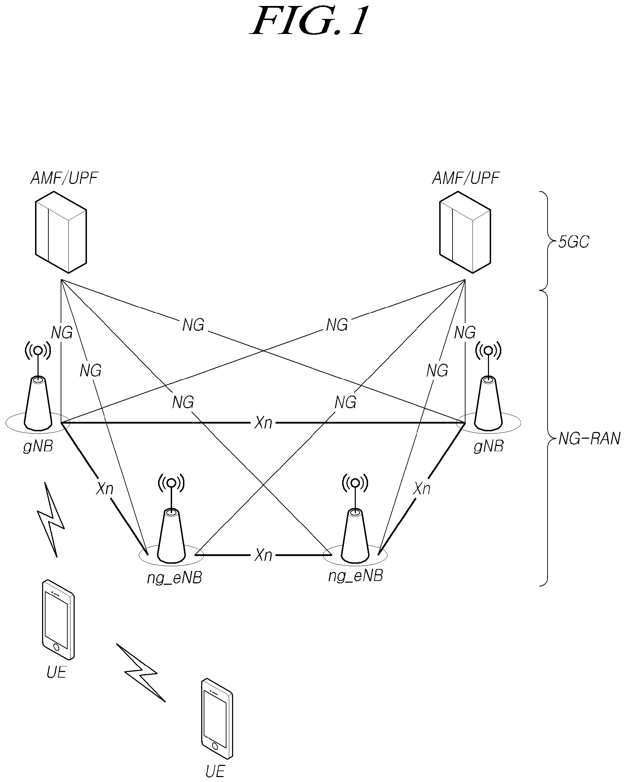

FIG. 1 is a view schematically illustrating an NR system.

Referring to FIG. 1, the NR system is divided into a 5G core network (5GC) and an NG-RAN part. The NG-RAN includes gNBs and ng-eNBs providing user plane (SDAP/PDCP/RLC/MAC/PHY) and user equipment (UE) control plane (RRC) protocol ends. The gNBs or the gNB and the ng-eNB are connected to each other through Xn interfaces. The gNB and the ng-eNB are connected to the 5GC through NG interfaces, respectively. The 5GC may be configured to include an access and mobility management function (AMF) for managing a control plane, such as a UE connection and mobility control function, and a user plane function (UPF) controlling user data. NR supports both frequency bands below 6 GHz (frequency range 1 FR1 FR1) and frequency bands equal to or greater than 6 GHz (frequency range 2 FR2 FR2).

The gNB denotes a base station that provides a UE with an NR user plane and control plane protocol end. The ng-eNB denotes a base station that provides a UE with an E-UTRA user plane and control plane protocol end. The base station described in the present specification should be understood as encompassing the gNB and the ng-eNB. However, the base station may be also used to refer to the gNB or the ng-eNB separately from each other, as necessary.

### <NR Waveform, Numerology, and Frame Structure>

NR uses a CP-OFDM waveform using a cyclic prefix for downlink transmission and uses CP-OFDM or DFT-s-OFDM for uplink transmission. OFDM technology is easy to combine with a multiple-input multiple-output (MIMO) scheme and allows a low-complexity receiver to be used with high frequency efficiency.

Since the three scenarios described above have different requirements for data rates, delay rates, coverage, and the like from each other in NR, it is necessary to efficiently satisfy the requirements for each scenario over frequency bands constituting the NR system. To this end, a technique for efficiently multiplexing radio resources based on a plurality of different numerologies has been proposed.

Specifically, the NR transmission numerology is determined on the basis of subcarrier spacing and a cyclic prefix (CP). As shown in Table 1 below, "µ" is used as an exponential value of 2 so as to be changed exponentially on the basis of 15 kHz.

**[Table 1]**

| µ | Subcarrier spacing | Cyclic prefix | Supported for data | Supported for synch |
|---|---|---|---|---|
| 0 | 15 | normal | Yes | Yes |
| 1 | 30 | normal | Yes | Yes |
| 2 | 60 | Normal, Extended | Yes | No |
| 3 | 120 | normal | Yes | Yes |
| 4 | 240 | normal | No | Yes |

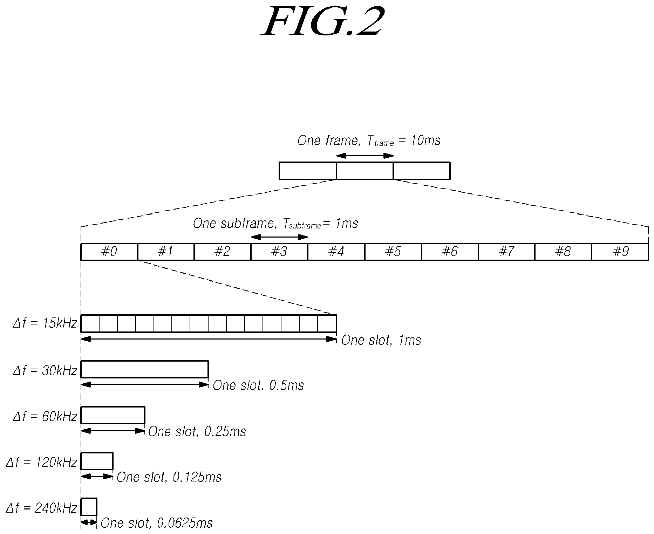

As shown in Table 1 above, NR may have five types of numerologies according to subcarrier spacing. This is different from LTE, which is one of the 4G-communication technologies, in which the subcarrier spacing is fixed to 15 kHz. Specifically, in NR, subcarrier spacing used for data transmission is 15, 30, 60, or 120 kHz, and subcarrier spacing used for synchronization signal transmission is 15, 30, 120, or 240 kHz. In addition, an extended CP is applied only to the subcarrier spacing of 60 kHz. A frame that includes 10 subframes each having the same length of 1 ms and has a length of 10 ms is defined in the frame structure in NR. One frame may be divided into half frames of 5 ms, and each half frame includes 5 subframes. In the case of a subcarrier spacing of 15 kHz, one subframe includes one slot, and each slot includes 14 OFDM symbols. FIG. 2 is a view for explaining a frame structure in an NR system.

Referring to FIG. 2, a slot includes 14 OFDM symbols, which are fixed, in the case of a normal CP, but the length of the slot in the time domain may be varied depending on subcarrier spacing. For example, in the case of a numerology having a subcarrier spacing of 15 kHz, the slot is configured to have the same length of 1 ms as that of the subframe. On the other hand, in the case of a numerology having a subcarrier spacing of 30 kHz, the slot includes 14 OFDM symbols, but one subframe may include two slots each having a length of 0.5 ms. That is, the subframe and the frame may be defined using a fixed time length, and the slot may be defined as the number of symbols such that the time length thereof is varied depending on the subcarrier spacing.

NR defines a basic unit of scheduling as a slot and also introduces a minislot (or a subslot or a non-slot-based schedule) in order to reduce a transmission delay of a radio section. If wide subcarrier spacing is used, the length of one slot is shortened in inverse proportion thereto, thereby reducing a transmission delay in the radio section. A minislot (or subslot) is intended to efficiently support URLLC scenarios, and the minislot may be scheduled in 2, 4, or 7 symbol units.

In addition, unlike LTE, NR defines uplink and downlink resource allocation as a symbol level in one slot. In order to reduce a HARQ delay, the slot structure capable of directly transmitting HARQ ACK/NACK in a transmission slot has been defined. Such a slot structure is referred to as a "self-contained structure", which will be described.

NR was designed to support a total of 256 slot formats, and 62 slot formats thereof are used in 3GPP Rel-15. In addition, NR supports a common frame structure constituting an FDD or TDD frame through combinations of various slots. For example, NR supports i) a slot structure in which all symbols of a slot are configured for a downlink, ii) a slot structure in which all symbols are configured for an uplink, and iii) a slot structure in which downlink symbols and uplink symbols are mixed. In addition, NR supports data transmission that is scheduled to be distributed to one or more slots. Accordingly, the base station may inform the UE of whether the slot is a downlink slot, an uplink slot, or a flexible slot using a slot format indicator (SFI). The base station may inform a slot format by instructing, using the SFI, the index of a table configured through UE-specific RRC signaling. Further, the base station may dynamically instruct the slot format through downlink control information (DCI) or may statically or quasi-statically instruct the same through RRC signaling.

### <Physical Resources of NR>

With regard to physical resources in NR, antenna ports, resource grids, resource elements, resource blocks, bandwidth parts, and the like are taken into consideration.

The antenna port is defined to infer a channel carrying a symbol on an antenna port from the other channel carrying another symbol on the same antenna port. If large-scale properties of a channel carrying a symbol on an antenna port can be inferred from the other channel carrying a symbol on another antenna port, the two antenna ports may have a quasi-co-located or quasi-co-location (QC/QCL) relationship. The large-scale properties include at least one of delay spread, Doppler spread, a frequency shift, an average received power, and a received timing.

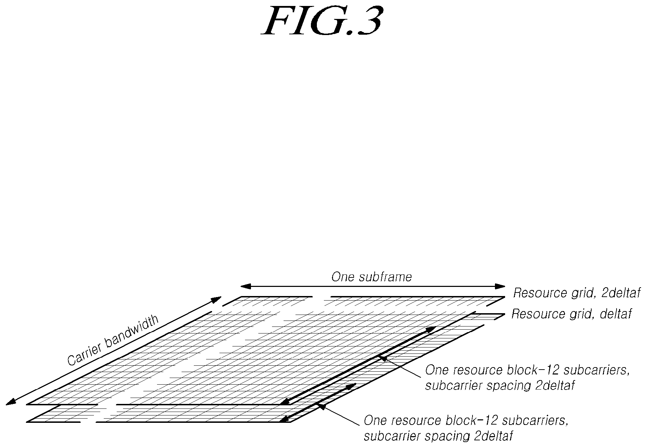

FIG. 3 illustrates resource grids supported by a radio access technology in accordance with embodiments of the present disclosure.

Referring to FIG. 3, resource grids may exist according to respective numerologies because NR supports a plurality of numerologies in the same carrier. In addition, the resource grids may exist depending on antenna ports, subcarrier spacing, and transmission directions.

A resource block includes 12 subcarriers and is defined only in the frequency domain. In addition, a resource element includes one OFDM symbol and one subcarrier. Therefore, as shown in FIG. 3, the size of one resource block may be varied according to the subcarrier spacing. Further, "Point A" that acts as a common reference point for the resource block grids, a common resource block, and a virtual resource block are defined in NR.

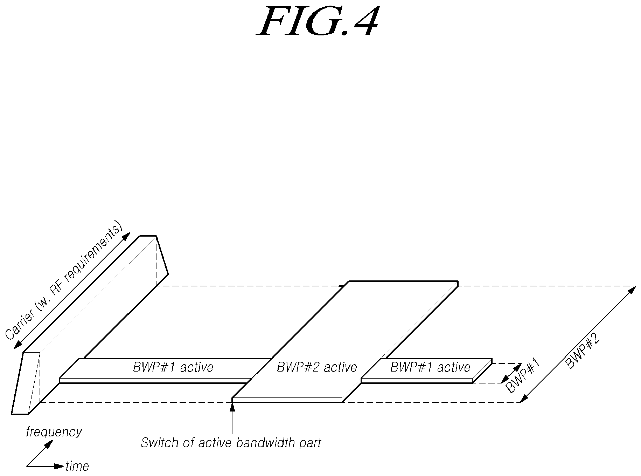

FIG. 4 illustrates bandwidth parts supported by a radio access technology in accordance with embodiments of the present disclosure.

Unlike LTE in which the carrier bandwidth is fixed to 20 MHz, the maximum carrier bandwidth is configured as 50 MHz to 400 MHz depending on the subcarrier spacing in NR. Therefore, it is not assumed that all UEs use the entire carrier bandwidth. Accordingly, as shown in FIG. 4, bandwidth parts (BWPs) may be specified within the carrier bandwidth in NR so that the UE may use the same. In addition, the bandwidth part may be associated with one numerology, may include a subset of consecutive common resource blocks, and may be activated dynamically over time. The UE has up to four bandwidth parts in each of the uplink and the downlink. The UE transmits and receives data using an activated bandwidth part during a given time.

In the case of a paired spectrum, uplink and downlink bandwidth parts are configured independently. In the case of an unpaired spectrum, in order to prevent unnecessary frequency re-tuning between a downlink operation and an uplink operation, the downlink bandwidth part and the uplink bandwidth part are configured in pairs to share a center frequency.

### <Initial Access in NR>

In NR, a UE performs a cell search and a random access procedure in order to access and communicates with a base station.

The cell search is a procedure of the UE for synchronizing with a cell of a corresponding base station using a synchronization signal block (SSB) transmitted from the base station and acquiring a physical-layer cell ID and system information.

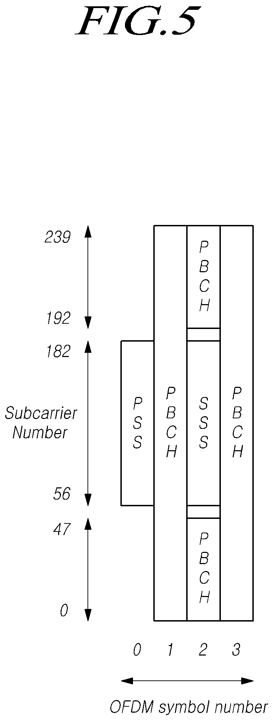

FIG. 5 illustrates an example of a synchronization signal block in a radio access technology in accordance with embodiments of the present disclosure.

Referring to FIG. 5, the SSB includes a primary synchronization signal (PSS) and a secondary synchronization signal (SSS), which occupy one symbol and 127 subcarriers, and PBCHs spanning three OFDM symbols and 240 subcarriers.

The UE monitors the SSB in the time and frequency domain, thereby receiving the SSB.

The SSB may be transmitted up to 64 times for 5 ms. A plurality of SSBs are transmitted by different transmission beams within a time of 5 ms, and the UE performs detection on the assumption that the SSB is transmitted every 20 ms based on a specific beam used for transmission. The number of beams that may be used for SSB transmission within 5 ms may be increased as the frequency band is increased. For example, up to 4 SSB beams may be transmitted at a frequency band of 3 GHz or less, and up to 8 SSB beams may be transmitted at a frequency band of 3 to 6 GHz. In addition, the SSBs may be transmitted using up to 64 different beams at a frequency band of 6 GHz or more.

One slot includes two SSBs, and a start symbol and the number of repetitions in the slot are determined according to subcarrier spacing as follows.

Unlike the SS in the typical LTE system, the SSB is not transmitted at the center frequency of a carrier bandwidth. That is, the SSB may also be transmitted at the frequency other than the center of the system band, and a plurality of SSBs may be transmitted in the frequency domain in the case of supporting a broadband operation. Accordingly, the UE monitors the SSB using a synchronization raster, which is a candidate frequency position for monitoring the SSB. A carrier raster and a synchronization raster, which are the center frequency position information of the channel for the initial connection, were newly defined in NR, and the synchronization raster may support a fast SSB search of the UE because the frequency spacing thereof is configured to be wider than that of the carrier raster.

The UE may acquire an MIB over the PBCH of the SSB. The MIB (master information block) includes minimum information for the UE to receive remaining minimum system information (RMSI) broadcast by the network. In addition, the PBCH may include information on the position of the first DM-RS symbol in the time domain, information for the UE to monitor SIB1 (e.g., SIB1 numerology information, information related to SIB1 CORESET, search space information, PDCCH-related parameter information, etc.), offset information between the common resource block and the SSB (the position of an absolute SSB in the carrier is transmitted via SIB 1), and the like. The SIB 1 numerology information is also applied to some messages used in the random access procedure for the UE to access the base station after completing the cell search procedure. For example, the numerology information of SIB1 may be applied to at least one of the messages 1 to 4 for the random access procedure.

The above-mentioned RMSI may mean SIB1 (system information block 1), and SIB1 is broadcast periodically (e.g., 160 ms) in the cell. SIB1 includes information necessary for the UE to perform the initial random access procedure, and SIB 1 is periodically transmitted over a PDSCH. In order to receive SIB1, the UE must receive numerology information used for the SIB 1 transmission and the CORESET (control resource set) information used for scheduling of SIB 1 over a PBCH. The UE identifies scheduling information for SIB1 using SI-RNTI in the CORESET. The UE acquires SIB1 on the PDSCH according to scheduling information. The remaining SIBs other than SIB1 may be periodically transmitted, or the remaining SIBs may be transmitted according to the request of the UE.

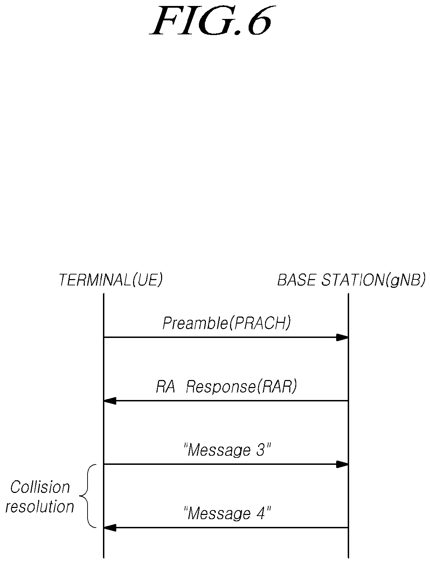

FIG. 6 is a view for explaining a random access procedure in a radio access technology.

Referring to FIG. 6, if a cell search is completed, the UE transmits a random access preamble for random access to the base station. The random access preamble is transmitted over a PRACH. Specifically, the random access preamble is periodically transmitted to the base station over the PRACH that includes consecutive radio resources in a specific slot repeated. In general, a contention-based random access procedure is performed when the UE makes initial access to a cell, and a non-contention-based random access procedure is performed when the UE performs random access for beam failure recovery (BFR).

The UE receives a random access response to the transmitted random access preamble. The random access response may include a random access preamble identifier (ID), UL Grant (uplink radio resource), a temporary C-RNTI (temporary cell-radio network temporary identifier), and a TAC (time alignment command). Since one random access response may include random access response information for one or more UEs, the random access preamble identifier may be included in order to indicate the UE for which the included UL Grant, temporary C-RNTI, and TAC are valid. The random access preamble identifier may be an identifier of the random access preamble received by the base station. The TAC may be included as information for the UE to adjust uplink synchronization. The random access response may be indicated by a random access identifier on the PDCCH, i.e., a random access-radio network temporary identifier (RA-RNTI).

Upon receiving a valid random access response, the UE processes information included in the random access response and performs scheduled transmission to the base station. For example, the UE applies the TAC and stores the temporary C-RNTI. In addition, the UE transmits, to the base station, data stored in the buffer of the UE or newly generated data using the UL Grant. In this case, information for identifying the UE must be included in the data.

Lastly, the UE receives a downlink message to resolve the contention.

### <NR CORESET>

The downlink control channel in NR is transmitted in a CORESET (control resource set) having a length of 1 to 3 symbols, and the downlink control channel transmits uplink/downlink scheduling information, an SFI (slot format index), TPC (transmit power control) information, and the like.

As described above, NR has introduced the concept of CORESET in order to secure the flexibility of a system. The CORESET (control resource set) refers to a time-frequency resource for a downlink control signal. The UE may decode a control channel candidate using one or more search spaces in the CORESET time-frequency resource. CORESET-specific QCL (quasi-colocation) assumption is configured and is used for the purpose of providing information on the characteristics of analogue beam directions, as well as delay spread, Doppler spread, Doppler shift, and an average delay, which are the characteristics assumed by existing QCL.

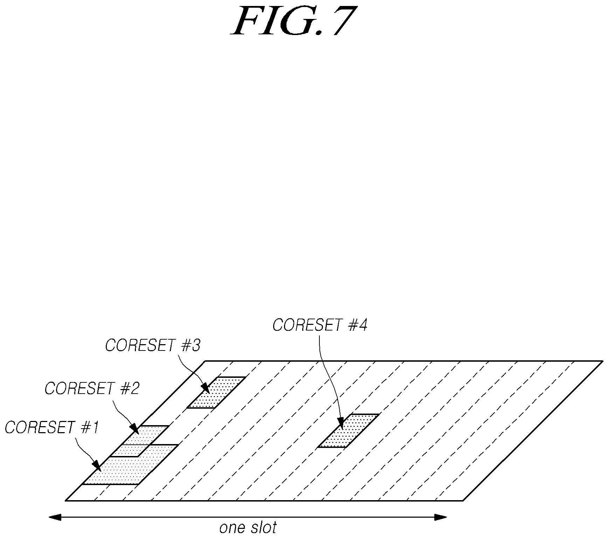

FIG. 7 illustrates CORESET.

Referring to FIG. 7, CORESETs may exist in various forms within a carrier bandwidth in a single slot, and the CORESET may include a maximum of 3 OFDM symbols in the time domain. In addition, the CORESET is defined as a multiple of six resource blocks up to the carrier bandwidth in the frequency domain.

A first CORESET, as a portion of the initial bandwidth part, is designated (e.g., instructed, assigned) through an MIB in order to receive additional configuration information and system information from a network. After establishing a connection with the base station, the UE may receive and configure one or more pieces of CORESET information through RRC signaling.

In this specification, a frequency, a frame, a subframe, a resource, a resource block, a region, a band, a subband, a control channel, a data channel, a synchronization signal, various reference signals, various signals, or various messages in relation to NR (New Radio) may be interpreted as meanings used at present or in the past or as various meanings to be used in the future.

This disclosure introduces a procedure for L1/L2-based inter-cell mobility control for a mobile communication terminal and a method for handling failures in the corresponding procedure.

### NR mobility

In typical NR technology, mobility control for cell change for the UE in the RRC connected state indicates handover through explicit RRC signaling. Cell change may be triggered by L3 measurement, and handover could be executed through RRC message signaling which include information necessary for accessing the target cell. This information may include one or more pieces of information among, e.g., reconfiguration with Sync, target cell ID, the new C-RNTI, the target gNB security algorithm identifiers for the selected security algorithms, a set of dedicated RACH resources, the association between RACH resources and SSB(s), the association between RACH resources and UE-specific CSI-RS configuration(s), common RACH resources, and system information of the target cell. When cell change is executed, the MAC entity of the corresponding cell group is reset. The UE applies the received new C-RNTI value as the C-RNTI of the cell group. The UE makes a configuration for the PHY/MAC/RLC/PDCP/SDAP layer according to the configuration information. This causes more delay, overhead, and interruption time than beam change (beam level mobility) within the same cell.

Beam level mobility does not require explicit RRC signaling to be triggered in the beam change process. The base station (network) may provide a measurement configuration including SSB/CSI resource and resource set, trigger state for triggering channel, and interference measurement and report configuration to the UE through RRC signaling. Beam level mobility may be provided through control signaling (e.g., DCI or MAC CE) of physical layer/MAC layer at a lower layer. SSB-based beam level mobility is based on the SSB associated with the initial downlink BWP. It may be configured only for the initial downlink BWP and downlink BWPs including the SSB associated with the initial downlink BWP. Beam level mobility for other DL BWPs could be performed based only on the CSI-RS. However, in the related art, beam switching supported only intra-cell mobility.

In related NR technology, cell level mobility (cell change) was provided based on L3 signaling, causing more delay, overhead, and interruption time than beam level mobility.

To address the foregoing issues, the disclosure introduces a procedure for providing an L1/L2 (signaling)-based cell change (inter-cell mobility) and a method and device for processing a failure occurring in the corresponding procedure.

Hereinafter, a method for providing cell level mobility will be described based on 5G NR radio access technology. However, this is for convenience of description, and the embodiments are not limited to 5G NR radio access technology. The present method may be applied to any radio access technology (e.g., 6G)-based cell change. Embodiments described in the disclosure include information elements, procedures, and operation contents specified in any NR standard (e.g., TS 38.321 which is an NR MAC standard and TS 38.331 which is an NR RRC standard). Even if the definition of the corresponding information element, the related procedure, and the related UE operation contents are not described in the disclosure, the corresponding contents specified in the standard specifications, which are a known technology, may be included in the present embodiments.

For convenience of description, a scenario related to the disclosure will be described first. However, this is just for convenience of description, and the embodiments are not limited to the described scenario. The embodiments may be applied to any network deployment scenario other than the following scenario.

An L1/L2 (signaling)-based cell change may be performed for a serving cell change (PCell change or SCell change) scenario in one cell group in an NR stand-alone structure or a serving cell change (SpCell (PCell/PSCell) change or SCell change) scenario in one cell group (e.g., MCG or SCG) in a dual-connectivity structure.

An intra-CU intra-DU L1/L2-based cell change may be performed between different cells associated with the corresponding DU in an intra-DU connected to the corresponding CU in an intra-CU (intra-CU). For example, the corresponding cells may have different physical cell IDs (PCIs) and may be inter-cell synchronized. Intra-CU inter-DU L1/L2-based cell change may be performed between cells associated with different DUs, respectively, for the different DUs connected to the corresponding CU within the intra-CU. For example, the corresponding cells may have different PCIs and may not be inter-cell synchronized. For another example, the corresponding cells may have different PCIs and may be inter-cell synchronized. Embodiments described below may be performed individually/independently. Embodiments may be performed in any combination thereof, and it is obvious that they are also included in the scope of the disclosure.

For convenience of description, a first transmit/receive point (TRP) denotes a transmit/receive point/TRP/beam/beams/beam group (BG) (via the corresponding TRP) providing one serving cell/PCell/SCell configured/activated in the UE. However, the embodiments are not limited thereto. This is for convenience of description. The first TRP may be replaced with any other name (e.g., primary/main/basic/SpCell associated/Serving cell associated TRP/beam/BG). A second transmit/receive point (TRP) denotes a transmit/receive point/TRP/beam/beams/beam group (BG) (via the corresponding TRP) providing a physical cell Id (PCI) different from the corresponding serving cell/PCell/SCell, or a transmit/receive point/TRP/beam/beams/beam group (BG) (via the corresponding TRP) associated with the physical cell Id (PCI) different from the corresponding serving cell/PCell/SCell. However, the embodiments are not limited thereto. This is for convenience of description. The second TRP may be replaced with any other name (e.g., secondary/additional/assisting/non-serving cell associated TRP/beam/BG). The cell associated with the second TRP or the second TRP may be configured/released in the UE. The cell associated with the second TRP or the second TRP may be activated/deactivated for the UE. One first TRP and one or more second TRPs may be provided/supported/configured/released/activated/inactivated for one UE.

An L1/L2-trigged mobility (LTM) operation denotes a cell change that provides a low latency and a small interruption time based on L1/L2. However, the embodiments are not limited thereto. This is for convenience of description. The L1/L2-triggered LTM operation may be replaced with any other name (e.g., low latency handover, high speed HO, fast HO, low latency HO, L1/L2 signaling based HO, low layer signaling based HO). Here, L1/L2 may represent at least one of L1/L2 signaling (e.g., MAC-CE/DCI), L1/L2 execution instruction information, quasi co location (QCL)/transmission configuration indication (TCI) state activation/update/instruction, L1/L2 execution condition (based on L1 measurement), L1/L2 event (based on L1 measurement), L1/L2 procedure, and UE operation in L1/L2 layer.

For the LTM operation, any function described below may be defined as an individual UE capability and may be transmitted to the base station by the UE. Alternatively, any functions may be combined/merged to be defined as the corresponding UE capability and transmitted to the base station by the UE.

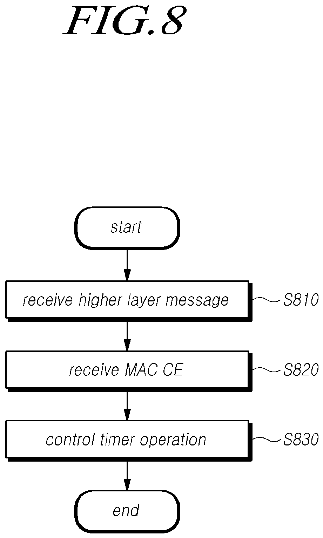

FIG. 8 is a flowchart illustrating a UE operation according to an embodiment.

Referring to FIG. 8, in a method of performing a cell change operation, the UE may perform the step of receiving an upper layer message including one or more candidate target cell configuration information for an LTM operation (S810).

In accordance with an embodiment, the UE may receive an RRC message including one or more candidate target cell configuration information from a base station or a TRP. The RRC message may include one or more pieces of candidate target cell configuration information, and each piece of candidate target cell configuration information may be separately included for each candidate target cell.

In accordance with an embodiment, the upper layer message may include at least one of cell group configuration information, identification information about candidate target cell configuration information, bandwidth part identification information, and transmission configuration indication (TCI) state configuration information. The cell group configuration information includes information for configuring a cell group using two or more cells. The identification information for the candidate target cell configuration information may include ID or index information. Accordingly, the UE may distinguish each candidate target cell configuration information. The bandwidth part identification information may include an ID or an index for distinguishing the bandwidth part (BWP). The TCI state configuration information may include at least one of a TCI state ID, a cell index, a cell ID, and a physical cell identity (PCI). Other information is described in more detail below.

Meanwhile, the candidate target cell configuration information includes information for performing L1 measurement on the serving cell or the candidate target cell and transmitting the L1 measurement result. For example, the UE measures the channel state for the serving cell or the candidate target cell using the candidate target cell configuration information. The UE transmits the measured channel state or channel quality information to the base station based on the information for transmission of the measurement result included in the candidate target cell configuration information. To that end, information for measurement reporting may be included in the candidate target cell configuration information.

According to an embodiment, when a condition for triggering transmission of the measurement result is met, the UE may transmit the measurement result of the corresponding serving cell or the candidate target cell to the base station. According to another embodiment, the transmission of the L1 measurement result is triggered when the measurement result of the candidate target cell is of a quality higher than a value obtained by adding or subtracting an offset to/from the measurement result of the source PSCell.

According to an embodiment, the base station may determine whether to perform the LTM operation based on the L1 measurement result information of the UE. According to another embodiment, the base station may determine the target cell to be changed through the LTM operation based on the L1 measurement result information of the UE.

The UE may perform the step of receiving a medium access control control element (MAC CE) that indicates to perform an LTM operation to the target cell (S820).

In accordance with an embodiment, when the base station determines to change the cell of the corresponding UE based on the L1 measurement result information received from the UE, the base station may indicate the same through the MAC CE.

According to an embodiment, the UE may receive instruction information instructing to perform the LTM operation included in the MAC CE. According to another embodiment, the UE may identify information about the target cell included in the MAC CE and receive an LTM operation execution instruction to the target cell.

Through the MAC CE, the UE should obtain information about the target cell to instruct to perform an LTM operation and to perform the cell change. To that end, the MAC CE may include at least one of identification information for candidate target cell configuration information, the TCI state ID, bandwidth part identification information, and the timing advance command. For example, the MAC CE may include identification information for distinguishing candidate target cell configuration information configured in the UE through the higher layer message. The identification information may be composed of candidate target cell configuration information ID or index information. Further, the MAC CE may include at least one of the TCI state ID, the bandwidth part ID, and the TAG.

The UE may perform the step of controlling an operation of a timer included in a higher layer message (S830).

According to an embodiment, when the MAC CE is received, the UE may identify the target cell to perform cell change based on the corresponding MAC CE. For example, the UE identifies identification information about the candidate target cell configuration information included in the MAC CE and identifies the candidate target cell configuration information allocated as the corresponding identification information and received through the higher layer message. The candidate target cell to which the corresponding candidate target cell configuration information is applied may be the target cell to be changed. In other words, the identification information allocated to the one or more candidate target cell configuration information received through the higher layer message and the identification information allocated to the candidate target cell configuration information received through the MAC CE may be the same. Accordingly, the UE may identify the target cell through the MAC CE.

When the target cell is identified, the UE applies the candidate target cell configuration information applied to the target cell to the UE. Further, the UE performs a cell change operation to the target cell using the candidate target cell configuration information about the target cell without performing the RRC reconfiguration operation.

In accordance with an embodiment, the UE may control an operation of a timer included in a higher layer message in a cell change operation process.

According to an embodiment, the timer may be initiated when receiving the MAC CE or when applying candidate target cell configuration information associated with the target cell. For example, the UE may start the timer included in the higher layer message if the MAC CE is received. Alternatively, the UE may identify the target cell indicated by the MAC CE and, when applying the candidate target cell configuration information associated with the target cell, start the timer.

According to another embodiment, the timer may be stopped when random access to the target cell is successfully completed or when transmitting or receiving complete indication information about a cell change to the target cell. For example, the UE may perform an LTM operation by the MAC CE, performing a random access operation to the target cell. If the UE completes the random access procedure to the target cell, the UE may stop the timer. Alternatively, the UE may stop the timer when the UE completes the cell change to the target cell according to the LTM operation to transmit complete indication information indicating the cell change completion to the source cell or the target cell. Alternatively, the UE may stop the timer when the UE completes the cell change to the target cell according to the LTM operation and receives complete indication information indicating the cell change completion from the source cell or the target cell.

Meanwhile, the UE may receive the MAC CE to initiate the timer and perform a cell change procedure according to the LTM operation, and the timer may expire for any reason before the cell change is completed.

In accordance with an embodiment, the UE may perform at least one of i) an operation of applying a UE configuration used in a source cell, ii) an operation of releasing random access configuration information, iii) a MAC reset operation, iv) an RRC reconfiguration procedure initiation operation, v) a failure information setting operation, and vi) a failure information transmission operation, if the timer is initiated and then expires. For example, if the timer expires before the cell change completion, the UE may re-apply the configuration of the source cell to the UE according to a failure in cell change to the source cell. As another example, in this case, the UE may release the configuration information for random access to the target cell. As another example, the UE may perform the operation of resetting the MAC configured for the target cell. As another example, the UE may initiate the RRC reconfiguration procedure to remove the cause of cell change failure. As another example, the UE may set failure information related to the cell change failure and may perform the operation of transmitting failure information to the base station.

Meanwhile, the UE may perform the operation of radio link monitoring and whether beam failure occurs for the source cell before receiving the MAC CE from the base station. In other words, the UE stores, in the UE, one or more pieces of candidate target cell configuration information included in the higher layer message and performs a radio link monitoring or beam failure detection operation of the source cell before the MAC CE is received. This may be associated with the above-described L1 measurement result transmission operation.

Alternatively, the UE may perform the operation of radio link monitoring and whether beam failure occurs for the target cell after receiving the MAC CE from the base station. In other words, the UE may receive the MAC CE to perform the cell change operation to the target cell and may monitor the radio link on the target cell and detect whether a beam failure occurs.

If the radio link monitoring result of the target cell has a problem in the cell change process or if a beam failure occurs so that the cell change is not completed until before the timer expires, the above-described operation according to timer expiration may be performed to perform re-access to the source cell.

According to the above-described operations, the UE may prevent communication drops even when a failure occurs in the cell change process according to an LTM operation, thereby providing a seamless service.

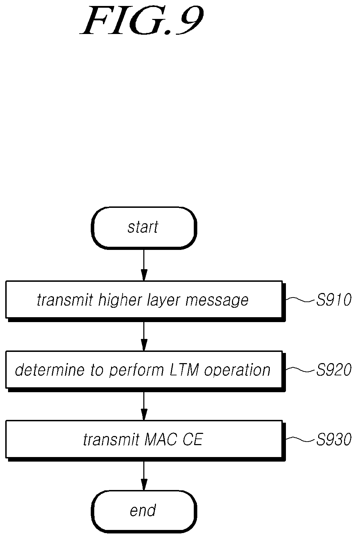

FIG. 9 is a flowchart for describing an operation of a base station according to an embodiment.

Referring to FIG. 9, in a method of controlling a cell change operation of a UE, the base station may perform the step of transmitting, to the UE, an higher layer message including one or more pieces of candidate target cell configuration information for an L1/L2-triggered mobility (LTM) operation (S910).

In accordance with an embodiment, the base station or the TRP may transmit an RRC message including one or more pieces of candidate target cell configuration information to the UE. The RRC message may include one or more pieces of candidate target cell configuration information, and each piece of candidate target cell configuration information may be separately included for each candidate target cell.

For example, the upper layer message may include at least one of cell group configuration information, identification information about candidate target cell configuration information, bandwidth part identification information, and transmission configuration indication (TCI) state configuration information. The cell group configuration information includes information for configuring a cell group using two or more cells. The identification information for the candidate target cell configuration information may include ID or index information. Accordingly, the UE may distinguish each candidate target cell configuration information. The bandwidth part identification information may include an ID or an index for distinguishing the bandwidth part (BWP). The TCI state configuration information may include at least one of a TCI state ID, a cell index, a cell ID, and a physical cell identity (PCI). Other information is described in more detail below.

Meanwhile, the candidate target cell configuration information includes information for performing L1 measurement on the serving cell or the candidate target cell and transmitting the L1 measurement result. For example, the UE measures the channel state for the serving cell or the candidate target cell using the candidate target cell configuration information. The UE transmits the measured channel state or channel quality information to the base station based on the information for transmission of the measurement result included in the candidate target cell configuration information. To that end, information for measurement reporting may be included in the candidate target cell configuration information.

For example, the UE may measure the channel state of the serving cell or the candidate target cell using information for transmitting the measurement result or the measurement included in the above-described candidate target cell configuration information. For example, the UE may measure L1-RSRP. As another example, the UE may measure L1-RSRQ. Further, the UE may measure the channel state for the serving cell or the candidate target cell using various measurement schemes capable of measuring the channel quality or the channel state.

Thereafter, the base station receives the measurement result report that includes the L1 measurement result transmitted by the UE. According to an embodiment, the UE may transmit the measurement result to the base station based on the information for transmission of the measurement result included in the candidate target cell configuration information. For example, when a condition for triggering transmission of the measurement result is met, the UE may transmit the measurement result of the corresponding serving cell or the candidate target cell to the base station. As another example, the transmission of the L1 measurement result is triggered when the measurement result of the candidate target cell is of a quality higher than a value obtained by adding or subtracting an offset to/from the measurement result of the source PSCell.

The base station may perform the step of determining to perform the LTM operation on the target cell based on the L1 measurement result (S920).

According to an embodiment, the base station may determine whether to perform the LTM operation based on the L1 measurement result information of the UE. According to another embodiment, the base station may determine the target cell to be changed through the LTM operation based on the L1 measurement result information of the UE.

As such, the base station may perform an LTM operation on the UE and determine a target cell to be changed by the UE based on the L1 measurement result received from the UE.

The base station may perform the step of transmitting, to the UE, a medium access control element (MAC CE) instructing to perform an LTM operation to the target cell (S930). When the MAC CE is received, the UE may control the operation of the timer included in the higher layer message.

According to an embodiment, when the base station determines to change the cell of the corresponding UE based on the L1 measurement result information received from the UE, the base station may indicate the same through the MAC CE.

According to an embodiment, the base station may include instruction information to instruct to perform the LTM operation in the MAC CE and transmit the same. According to another embodiment, the base station may include information about the target cell in the MAC CE and transmit the same.

Through the MAC CE, the UE may obtain information about the target cell to instruct to perform an LTM operation and to perform the cell change. For example, the MAC CE may include at least one of identification information for candidate target cell configuration information, the TCI state ID, bandwidth part identification information, and the timing advance command. For example, the MAC CE may include identification information for distinguishing candidate target cell configuration information configured in the UE through the higher layer message. The identification information may be composed of candidate target cell configuration information ID or index information. Further, the MAC CE may include at least one of the TCI state ID, the bandwidth part ID, and the TAG.

According to an embodiment, when the MAC CE is received, the UE may identify the target cell to perform cell change based on the corresponding MAC CE. For example, the UE identifies identification information about the candidate target cell configuration information included in the MAC CE and identifies the candidate target cell configuration information allocated as the corresponding identification information and received through the higher layer message. The candidate target cell to which the corresponding candidate target cell configuration information is applied may be the target cell to be changed. In other words, the identification information allocated to the one or more candidate target cell configuration information received through the higher layer message and the identification information allocated to the candidate target cell configuration information received through the MAC CE may be the same. Accordingly, the UE may identify the target cell through the MAC CE.

When the target cell is identified, the UE applies the candidate target cell configuration information applied to the target cell to the UE. Further, the UE performs a cell change operation to the target cell using the candidate target cell configuration information about the target cell without performing the RRC reconfiguration operation.

According to an embodiment, the UE may control an operation of a timer included in a higher layer message in a cell change operation process.

According to an embodiment, the timer may be initiated when receiving the MAC CE or when applying candidate target cell configuration information associated with the target cell. For example, the UE may start the timer included in the higher layer message if the MAC CE is received. Alternatively, the UE may identify the target cell indicated by the MAC CE and, when applying the candidate target cell configuration information associated with the target cell, start the timer.

According to another embodiment, the timer may be stopped when random access to the target cell is successfully completed or when transmitting or receiving complete indication information about a cell change to the target cell. For example, the UE may perform an LTM operation by the MAC CE, performing a random access operation to the target cell. If the UE completes the random access procedure to the target cell, the UE may stop the timer. Alternatively, the UE may stop the timer when the UE completes the cell change to the target cell according to the LTM operation to transmit complete indication information indicating the cell change completion to the source cell or the target cell. Alternatively, the UE may stop the timer when the UE completes the cell change to the target cell according to the LTM operation and receives complete indication information indicating the cell change completion from the source cell or the target cell.

Meanwhile, the UE may receive the MAC CE to initiate the timer and perform a cell change procedure according to the LTM operation, and the timer may expire for any reason before the cell change is completed.

According to an embodiment, the UE may perform at least one of i) an operation of applying a UE configuration used in a source cell, ii) an operation of releasing random access configuration information, iii) a MAC reset operation, iv) an RRC reconfiguration procedure initiation operation, v) a failure information setting operation, and vi) a failure information transmission operation, if the timer is initiated and then expires. For example, if the timer expires before the cell change completion, the UE may re-apply the configuration of the source cell to the UE according to a failure in cell change to the source cell. As another example, in this case, the UE may release the configuration information for random access to the target cell. As another example, the UE may perform the operation of resetting the MAC configured for the target cell. As another example, the UE may initiate the RRC reconfiguration procedure to remove the cause of cell change failure. As another example, the UE may set failure information related to the cell change failure and may perform the operation of transmitting failure information to the base station.

Meanwhile, the UE may perform the operation of radio link monitoring and whether beam failure occurs for the source cell before receiving the MAC CE from the base station. In other words, the UE stores, in the UE, one or more pieces of candidate target cell configuration information included in the higher layer message and performs a radio link monitoring or beam failure detection operation of the source cell before the MAC CE is received. This may be associated with the above-described L1 measurement result transmission operation.

Alternatively, the UE may perform the operation of radio link monitoring and whether beam failure occurs for the target cell after receiving the MAC CE from the base station. In other words, the UE may receive the MAC CE to perform the cell change operation to the target cell and may monitor the radio link on the target cell and detect whether a beam failure occurs.

If the radio link monitoring result of the target cell has a problem in the cell change process or if a beam failure occurs so that the cell change is not completed until before the timer expires, the above-described operation according to timer expiration may be performed to perform re-access to the source cell.

According to the above-described operations, the base station may prevent communication drops even when a failure occurs in the UE in the cell change process according to an LTM operation, thereby providing a seamless service.

More detailed operations will be described below in greater detail through individual embodiments. The individual embodiments described below may be performed in any combination of all or some thereof by the UE and the base station.

### Failure processing in L1/L2-based cell change (e.g., SpCell change or handover) process

In the LTM operation process, the failure processing may be processed in association with a radio link failure procedure. In the LTM operation process, the failure processing may be processed in association with a beam failure detection and recovery procedure.

Before receiving the L1/L2 signaling in which the cell change is triggered/executed/applied for the LTM operation, before triggering/initiating/executing/applying the LTM operation based on the L1/L2 signaling/event/procedure/operation, or until the above-described corresponding time, the UE may continue to detect the radio link failure/beam failure in the source cell. The radio link failure is declared when one of physical layer problems (Expiry of a radio problem timer started after indication of radio problems from the physical layer), measurement reporting problems (Expiry of a timer started upon triggering a measurement report for a measurement identity for which the timer has been configured while another radio problem timer is running), random access failure (Random access procedure failure) and RLC failure criteria is met. The beam failure is declared when the number of beam failure instances from the physical layer reaches a predetermined threshold before a predetermined timer expires. The beam failure instance maximum count (beamFailureInstanceMaxCount) and the beam failure detection timer (beamFailureDetectionTimer) for beam failure detection may be configured for each beam failure detection-RS set for a cell configured with a plurality of beam failure detection-RS sets.

For example, if a radio link failure/beam failure is detected in the source cell before receiving the L1/L2 signaling in which the cell change is triggered/executed/applied for the LTM operation, before triggering/initiating/executing/applying the LTM operation based on the L1/L2 signaling/event/procedure/operation, or until the above-described corresponding time, the UE may perform one or more of the following operations.
- The UE may stop transmitting/receiving data through the source cell/leg/link.
- The UE may release the source cell/leg/link. However, the source/source cell RRC configuration may be maintained.
- The UE may select a suitable cell.
- If the appropriate cell is the candidate/target cell stored/preconfigured in the UE, and/or if the network/base station configures/instructs the UE to attempt the corresponding operation, and/or if the event/execution condition/procedure/operation for supporting/associating the LTM operation is detected/met/performed (e.g., detection of indicated/stored/preconfigured reference signal, when the L1 measurement/L3 measurement for the corresponding reference signal exceeds a specific threshold, satisfaction of L1 report/L3 report trigger criteria for supporting/associating the LTM operation (or TCI state update), or satisfaction of event triggered measurement reporting criteria), the UE may perform a cell change/handover (or execution/application of the LTM operation configuration, or execution of cell change/handover through a preconfigured configuration, or cell change/handover according to L1/L2 signaling/event/procedure/operation) to the corresponding cell. Otherwise, the UE may perform an RRC reset procedure.
- If an appropriate cell is not discovered within a predetermined time after the radio link failure/beam failure is declared, the UE may enter the RRC idle state.
   (If the corresponding cell is configured with the beam failure detection-RS set and/or beam failure recovery is triggered by one or more beam failure detection-RS sets of the corresponding source cell)
- The UE may trigger beam failure recovery by initiating a random access procedure in the source cell.
- The UE may trigger beam failure recovery/cell change/handover by initiating a random access procedure in the target cell.
- The UE may select an appropriate beam to perform beam failure recovery/cell change/handover.
   (If the base station provides a dedicated random access resource for a specific beam, and they have priority by the UE)
- If the random access procedure is contention-based random access, signaling (e.g., BFR MAC CE, UCI) for beam failure recovery may include beam failure recovery information on the source cell.

As another example, if radio link failure/beam failure is detected in the target cell when the LTM operation is triggered/initiated/executed/applied based on L1/L2 signaling/event/procedure/operation and/or until before indication information for releasing the source cell configuration (through RRC signaling message/MAC CE/DCI) from the base station/target cell/source cell and/or until the above-described corresponding time, the UE may perform one or more of the following operations.
- The UE may reset the MAC for the target cell (e.g., target PCell).
- The UE may release the MAC configuration for the target cell.
- The UE may release the RLC entity for the target cell and the associated logical channel for the LTM radio bearer.
- For the LTM radio bearer, the PDCP entity may perform one or more of the operations according to the embodiments described in the disclosure.
- The UE may release the physical channel configuration for the target cell.
- (If there is a signaling radio bearer suspended through the source cell), the UE may trigger the PDCP entity to perform PDCP SDU discard on the signaling radio bearer. The PDCP entity may discard all stored PDCP SDUs and PDCP PDUs. The UE may reconfigure the RLC entity for the source cell (e.g., PCell). The UE may resume the suspended SRBs in the source cell.
- For general radio bearers (or for radio bearers other than the LTM radio bearer), it is possible to revert to the UE configuration used for the corresponding DRB in the source cell. The UE configuration used for the corresponding DRB in the source cell may include one or more of the PDCP/RLC state variable, security configuration, and data stored in the transmission/reception buffer in the PDCP/RLC entity.
- The UE may store/set LTM operation failure information in the corresponding UE variable.
- The UE may initiate a failure information procedure for reporting LTM operation failure. A new failure type may be defined in the RRC failure information message to identify the LTM operation failure type. The UE may set the corresponding failure type and submit the corresponding failure information message to the lower layer. The UE may transmit the corresponding message to the base station through the source cell by SRB1.
- The UE may revert to the UE configuration used in the source cell.
- (If signaling radio bearer/data radio bearer through the source cell is maintained/available, and/or if the network/base station configures/instructs the UE to perform the corresponding operation) the UE may initiate/resume/perform data transmission/reception through the source cell. -The UE may release the RLC entity for the target cell and the associated logical channel.
- (If uplink/downlink data transmission/reception is switched from the source cell to the target cell, or if radio link failure/beam failure is detected in the source cell) the UE may select an appropriate cell and initiate an RRC reconfiguration procedure.
- The UE may initiate an RRC connection reconfiguration procedure.
- If an appropriate cell is not discovered within a predetermined time after the LTM operation is declared, the UE may enter the RRC idle state.
   (If the corresponding cell is configured with the beam failure detection-RS set and/or beam failure recovery is triggered by one or more beam failure detection-RS sets of the corresponding source cell)
- The UE may trigger beam failure recovery by initiating a random access procedure in the source cell.
- The UE may trigger beam failure recovery/cell change/handover by initiating a random access procedure in the target cell.
- The UE may select an appropriate beam to perform beam failure recovery/cell change/handover.
   (If the base station provides a dedicated random access resource for a specific beam, and they have priority by the UE)
- If the random access procedure is contention-based random access, signaling (e.g., BFR MAC CE, UCI) for beam failure reporting may include beam failure indication on the source cell.

As another example, if the timer for limiting/controlling the LTM operation time expires, the UE may perform one or more of the following operations.
- If configured, the UE may release the dedicated preamble/msgA PUSCH resource provided to the dedicated random access configuration information (rach-ConfigDedicated).
- If configured, the UE may release the pre-allocated/indicated uplink grant.
- If the LTM radio bearer is configured, and radio link failure/beam failure is not detected in the source cell, the UE may perform one or more of the following operations.
   --The UE may reset the MAC for the target cell (e.g., target PCell).
   --The UE may release the MAC configuration for the target cell.
   --The UE may release the RLC entity for the target cell and the associated logical channel for the LTM radio bearer.
   --For the LTM radio bearer, the PDCP entity may perform one or more of the operations according to the embodiments included in the disclosure.
- The UE may release the physical channel configuration for the target cell.
- (If there is a signaling radio bearer suspended through the source cell), the UE may trigger the PDCP entity to perform PDCP SDU discard on the signaling radio bearer. The PDCP entity may discard all stored PDCP SDUs and PDCP PDUs. The UE may reconfigure the RLC entity for the source cell (e.g., PCell). The UE may resume the suspended SRBs in the source cell.
- For general radio bearers (or for radio bearers other than the LTM radio bearer), it is possible to revert to the UE configuration used for the corresponding DRB in the source cell. The corresponding UE configuration may include the PDCP/RLC state variable, security configuration, and data stored in the transmission/reception buffer in the PDCP/RLC entity.
- The UE may initiate a failure information procedure for reporting LTM operation failure. A new failure type may be defined in the RRC failure information message to identify the LTM operation failure type. The UE may set the corresponding failure type and submit the corresponding failure information message to the lower layer. The UE may transmit the corresponding message to the base station through the source cell by SRB1.
- (If signaling radio bearer through the source cell is maintained, and/or if the network/base station configures/instructs the UE to perform the corresponding operation) the UE may transmit/receive data through the source cell. -The UE may release the RLC entity for the target cell and the associated logical channel.

As another example, if the corresponding timer expires, the LTM radio bearer is configured, and radio link failure is detected in the source cell, the UE may perform one or more of the following operations.
- The UE may revert to the UE configuration used in the source cell.
- The UE may store LTM operation failure information in the corresponding UE variable (VarRLF-Report).
- The UE may initiate an RRC connection reconfiguration procedure.

As another example, if the L1/L2 signaling-based cell change fails, the UE may fall back to the source cell configuration. If the source link is not released, the UE may transmit/receive data through the source cell connection (or resume the source cell connection) without triggering RRC connection reconfiguration. The UE may report the corresponding handover failure through the source cell.

As another example, the UE may perform cell selection. If the selected cell is the candidate/target cell, and the network configures the UE to attempt a cell change/handover to the corresponding cell through a stored/preconfigured configuration after the UE fails, then the UE may execute/perform the same. Otherwise, the UE may perform RRC connection reconfiguration.

### L1/L2-based cell change procedure and timer operation

The procedure for providing the L1/L2-triggered mobility (LTM) operation may include i) a step in which the base station indicates a configuration for the LTM operation to the UE through RRC signaling for the candidate cell and ii) a step in which the UE stores/applies the configuration for the LTM operation and executes/applies the L1/L2 signaling-based cell change. This procedure will be described below.

The configuration for the LTM operation indicated through RRC signaling may include one or more pieces of information among an LTM candidate/target cell configuration, an LTM radio bearer configuration, an L1L2 signaling configuration for the LTM operation, an execution instruction information configuration for the LTM operation, a TCI state configuration for the LTM operation, and an execution condition/event configuration for the LTM operation.

When the UE receives the configuration for the LTM operation, the UE may store part or all of the configurations included in the corresponding configuration. When the UE receives the configuration for the LTM operation, the UE may apply part or all of the configurations included in the corresponding configuration. For example, the UE may define a UE variable for storing the corresponding configuration and may store part or all of the configurations for the LTM operation in the corresponding UE variable.

The UE may transmit an RRC reconfiguration complete message to the base station (through the source cell). The UE may maintain the source cell connection after receiving the configuration for the LTM operation. The UE may monitor/evaluate L1L2 signaling/execution instruction information/TCI state/execution condition/event for LTM operation for configured/stored candidate/target cell. Alternatively, the UE may start monitoring/evaluating L1L2 signaling/execution instruction information/TCI state/execution condition/event.

The LTM operation may be triggered/initiated/executed/applied based on L1L2 signaling/executive instruction information/TCI state/executive condition/event/related procedure/operation for the UE having the corresponding configuration preconfigured/stored through RRC. The L1L2 signaling/execution instruction information/TCI state indicated to the UE by the base station may be triggered/initiated/executed/applied by one or more of the execution condition/event configured in the UE by the base station and the L1/L2 procedure/operation defined in the UE. For example, the UE may execute/apply the corresponding configuration stored for the selected/instructed/triggered candidate/target cell.

For example, when the corresponding L1/L2 signaling is received, part or all of the candidate/target cell configuration (or the candidate/target cell configuration stored/preconfigured in the UE) included in the corresponding RRC reconfiguration message may be applied/executed. When the corresponding L1/L2 signaling is received, the UE may apply/execute the corresponding configuration stored for the selected candidate/target cell.

As another example, the corresponding candidate/target cell configuration may include one or more pieces of information among the cell group configuration (CellGroupConfig), the special cell configuration (SpCellConfig), information for identifying the corresponding cell (e.g., PCI, PCI index, serving cell index, arbitrary cell identifier, ID, configuration identification information, or TCI state ID associated with the corresponding cell), handover information (reconfigurationWithSync), the candidate/target cell UE identifier (newUE-Identity/C-RNTI), the timer (e.g., t304 or new timer) for limiting/controlling LTM time, and SSB-based measurement timing configuration (SMTC) and the SSB periodicity/offset/duration configuration of target cell for candidate/target cell synchronization/measurement.

The timer may perform one or more of the following operations.

The corresponding timer may be started when the LTM operation is executed (e.g., when the cell change/handover is triggered/started/executed/applied based on L1L2 signaling/execution instruction information/TCI state/execution condition/event/related procedure/operation), i) when the execution condition is met by evaluating the execution condition/event configured in the UE, ii) when a specific procedure/operation (e.g., measurement, event detection, condition satisfaction, TCI state update application, etc.) is performed in the UE according to the L1/L2 signaling reception and the corresponding configuration, or iii) when whole/part of the stored/preconfigured corresponding configuration is applied).

The timer may be stopped when the random access to the candidate/target/SpCell is successfully completed.

The timer may be stopped when the corresponding L3/L2/L1 indication/acknowledgement information (e.g., RRC reconfiguration complete message/RRC reconfiguration message including the corresponding information/MAC-CE/HARQ-ACK/UCI) is received from the corresponding candidate/target/SpCell.

When the corresponding timer expires (for the MCG), an RRC reconfiguration procedure may be initiated.

When the corresponding timer expires (for the MCG), the source cell configuration may be applied.

When the timer expires (for the MCG), connection to the source cell may be attempted.

When the timer expires (for the MCG), the random access to the source cell may be started.

When the timer expires (for the MCG), if the bearer for the LTM operation is configured and the RLF does not occur in the source cell, failure information may be indicated to the source cell/base station.

The typical T304 timer used in an NR-based handover process may be used as the corresponding timer. Alternatively, a new timer distinguished from the conventional T304 timer may be configured and used as the corresponding timer.

As another example, when the corresponding L1/L2 signaling is received, data may be transmitted/received through the radio bearer for the corresponding LTM operation.

As another example, the LTM operation may be triggered/started/executed when the execution condition is met by evaluating the execution condition configured by the base station in the UE. And/or when the corresponding L1/L2 signaling is received, if the corresponding execution condition is met, it may be triggered/started/executed. For example, the corresponding execution condition may include one or more of reaching an L1 measurement-based threshold value, detecting an L1 measurement (e.g., L1-RSRP)-based event, meeting an L1 report/CSI report trigger condition, detecting an L3 measurement-based event, presence of a valid candidate/target cell configuration (or stored configuration/pre-configuration), presence of an activated TCI state (candidate/target cell), and a corresponding resource set configuration. The corresponding execution condition/event may be configured in association with one or more of (L3) measurement identifier, L1 measurement identifier (e.g., MeasID), L1 report identifier (e.g., L1/CSI-ReportConfigId), L1 event identifier (e.g., eventID), and L3 event identifier. The corresponding execution condition/event may include one or more events among when the measurement associated with the source cell/source RS/target cell/target RS has a better value than the threshold, when the measurement associated with the source cell/source RS/target cell/target RS has a worse value than the threshold, when the measurement associated with the target cell/target RS is better than the measurement associated with the source cell/source RS, when the measurement associated with the target cell/target RS is better than a value obtained by adding/subtracting an offset to/from the measurement associated with the source cell/source RS, and when the measurement associated with the source cell/source RS has a worse value than the threshold and the measurement associated with the target cell/target RS has a better value than the threshold.

### L1/L2-based cell change process in base station split structure

NR provides a split structure that divides a base station (gNB) into a central unit (hereinafter, referred to as gNB-CU for convenience of description) and a distributed unit (hereinafter, referred to as gNB-DU for convenience of description) to support efficient network construction. The radio network is constituted of one set of base stations connected to the 5G core network (5GC) through the NG interface. The base stations are connected to each other through the Xn interface. One base station may be constituted of one gNB-CU and one or more gNB-DUs. The gNB-CU and the gNB-DU are connected to each other through the F1 interface. One gNB-DU may be connected to only one gNB-CU. The NG interface and the Xn-C interface for one base station constituted of the gNB-CU and the gNB-DU are terminated at the gNB-CU. The gNB-DUs connected with the gNB-CU are shown as only one base station to other base stations and the 5GC. The gNB-CU is a logical node hosting the RRC, SDAP and PDCP protocols of the base station. The gNB-DU is a logical node hosting the RLC, MAC and PHY layer of the base station. One gNB-DU supports one or more cells. One cell is supported by only one gNB-DU.

For example, the LTM operation determination may be performed by the CU. For example, the CU may determine the LTM operation based on the RRM measurement or the like. When the LTM operation is determined in the CU, the CU may transmit an F1AP message indicating the LTM operation to the DU. The message may include one or more pieces of information described in the disclosure. The DU may indicate L1/L2 signaling for the LTM operation to the UE. The DU may transmit a reference signal associated with L1/L2 signaling.

As another example, the LTM operation determination may be performed by the DU. For example, the DU may determine the LTM operation based on L1 reporting (e.g., CSI report). The DU may indicate L1/L2 signaling for the LTM operation to the UE. The DU may transmit a reference signal associated with L1/L2 signaling. The DU may transmit an F1AP message to the CU to notify the CU that L1/L2 signaling for the LTM operation is indicated to the UE. The message may include one or more pieces of information described in the disclosure. When the CU receives the corresponding message, the RRC/PDCP of the CU may perform one or more operations according to the disclosure.

Hereinafter, embodiments for a radio bearer for L1/L2-based cell change and user plane processing will be further described.

When cell change/handover is triggered/initiated/executed/applied based on L1L2 signaling/execution indication information/TCI state/execution condition/event/related procedure/operation, when the execution condition is met by evaluating the execution condition/event configured in the UE, or when a specific procedure/operation (e.g., measurement, event detection, condition satisfaction, application of TCI state update, etc.) is performed in the UE according to L1/L2 signaling reception and the corresponding configuration, part or all of the configurations (or candidate/target cell configurations stored/preconfigured in the UE) included in the corresponding RRC reconfiguration message may be applied.

When the cell change/handover is triggered/initiated/executed/applied based on the L1L2 signaling/execution indication information/TCI state/execution condition/event/related procedure/operation, when the execution condition is met by evaluating the execution condition/event configured in the UE, or when the L1/L2 signaling is received and a specific procedure/operation (e.g., measurement, event detection, condition satisfaction, application of TCI state update, etc.) is performed in the UE according to the corresponding configuration, data may be transmitted/received through the radio bearer for the corresponding LTM operation. For example, the UE may switch uplink/downlink data from the source cell to the candidate/target cell to transmit/receive the uplink/downlink data. As another example, uplink/downlink data may be switched from the L2 entity associated with the source cell to the L2 entity associated with the candidate/target cell to be transmitted/received.

The radio bearer for the LTM operation may be applied/configured/stored in the UE when the base station indicates the LTM configuration to the UE through RRC signaling. Alternatively, the radio bearer for the LTM operation may be applied/configured to the UE (according to the stored configuration) when receiving the corresponding L1/L2 signaling.

For example, as the radio bearer for the LTM operation, the same radio bearer structure as a general data radio bearer (DRB) or a signaling radio bearer (SRB) to which one PDCP entity, one RLC entity, and one MAC entity are associated may be used. As another example, the radio bearer for the LTM operation may be configured by adding an advanced function to the L1/L2 entity included/associated with the general data radio bearer/signaling radio bearer structure. For example, the UE may reconstruct, set, and maintain the radio bearer used in the source cell and the L1/L2 entity (one PDCP entity, one RLC entity, and one MAC entity) associated with the corresponding radio bearer in the target cell with the same configuration and/or continuously maintained PDCP/RLC/MAC state variables/buffer/timer/parameter values for one or more parameters (or for all the parameters). For example, the source cell may use the value stored in the corresponding PDCP entity as the initial value without setting 0 as the initial value for the corresponding state variables (e.g., TX_NEXT, RX_NEXT, RX_DELIV, and RX _REOR) for the corresponding radio bearer. Only PDCP state variables are described, but this is only for convenience of description. It is obvious that any RLC state variable and any MAC parameter are also included in the scope of the disclosure.

As another example, the radio bearer for the LTM operation may include one or more of the radio bearers (e.g., DRB and SRB) described below for fast switching. In the disclosure, an LTM radio bearer denotes any radio bearer used in the process of the LTM operation included in the disclosure. However, embodiments are not limited thereto. This is for convenience of description. The LTM radio bearer may indicate any radio bearer configured in the UE when performing the LTM operation. The radio bearer may be provided through one type/L2 structure, or one or more types/L2 structures may be defined and provided according to a corresponding scenario.

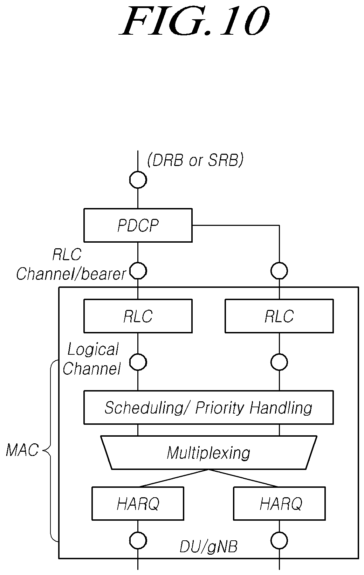

FIG. 10 is a view illustrating an example of a downlink L2 structure for an LTM radio bearer.

Referring to FIG. 10, an LTM radio bearer may have a split structure where one PDCP entity has two RLC entities (AM/UM) (one PDCP entity is associated with two RLC entities). Each RLC entity may be associated with one MAC entity. For example, the L1/L2-based cell change may be performed between cells associated with the corresponding DU in the intra-DU/gNB/gNB-DU connected to the corresponding CU in the intra-CU/gNB-CU (intra-CU/gNB-CU).

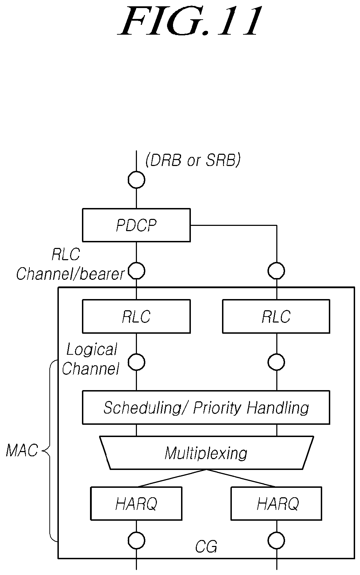

FIG. 11 is a view illustrating an example of an uplink L2 structure for an LTM radio bearer.

Referring to FIG. 11, an LTM radio bearer having a split structure where one PDCP entity has two RLC entities (AM/UM) (one PDCP entity is associated with two RLC entities) in one cell group (e.g., MCG) may be configured in the UE. Each RLC entity may be associated with a single MAC entity.

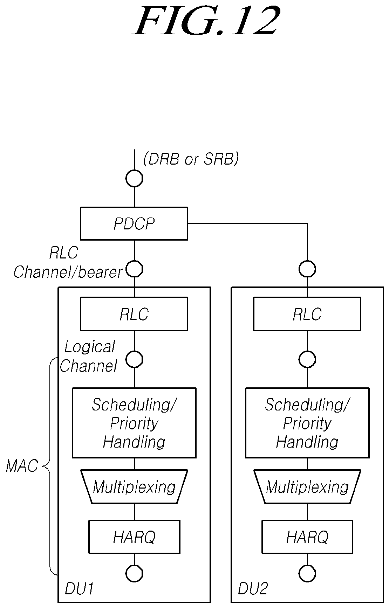

FIG. 12 is a view illustrating another example of a downlink L2 structure for an LTM radio bearer.

Referring to FIG. 12, an LTM radio bearer may have a split structure where one PDCP entity has two RLC entities (AM/UM) (one PDCP entity is associated with two RLC entities). Each RLC entity may be associated with each MAC entity. For example, an intra-CU inter-DU L1/L2-based cell change may be performed between cells associated with the respective DUs for different DUs connected to the corresponding CU in the intra-CU.

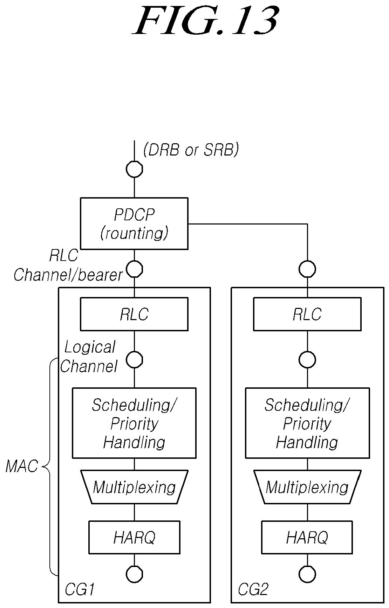

FIG. 13 is a view illustrating another example of an uplink L2 structure for an LTM radio bearer.

Referring to FIG. 13, an LTM radio bearer having a split structure where one PDCP entity has two RLC entities (AM/UM) (one PDCP entity is associated with two RLC entities) in one cell group (e.g., MCG) may be configured in a UE. Each RLC entity may be associated with each MAC entity associated with each cell group (e.g., MCG or SCG).

The LTM operation configuration through RRC signaling may include one or more candidate/target cell configurations. When one or more candidate cells are provided, an additional L2 entity for supporting the corresponding candidate cell may be configured in association.

For example, when two candidate cells are provided in the structure of FIG. 10 and/or FIG. 11, there may be three RLC entities associated with one PDCP entity. When the handover to a specific candidate/target cell is successfully completed, the remaining RLC entities may be released. Alternatively, when the handover to the specific candidate/target cell is successfully completed, the remaining RLC entities may be maintained. Accordingly, the L1/L2-based cell change may be triggered/initiated/applied/performed until the release of the corresponding candidate cell is indicated through RRC signaling. As another example, when two candidate cells are provided in the structure of FIG. 12 and/or FIG. 13, there may be three RLC entities associated with one PDCP entity. Each RLC entity may be associated with each MAC entity. When the handover to a specific candidate/target cell is successfully completed, the remaining RLC entity and MAC entity may be released. Alternatively, when the handover to the specific candidate/target cell is successfully completed, the remaining RLC entity and MAC entity may be maintained. Accordingly, the L1/L2-based cell change may be triggered/initiated/applied/performed until the release of the corresponding candidate cell is indicated through RRC signaling.

As another example, when two candidate cells are provided in the structure of FIGS. 10 to 13, the number of activated RLC entities associated with one PDCP entity (used for an LTM operation) may be limited to two. The number of PCIs different from the serving cell associated with the activated TCI state may be limited to one. The number of RLC entities (or RLC entity/MAC entity) associated therewith may be limited to two. When receiving the corresponding L1/L2 signaling, the corresponding L2 entity may be activated/configured/applied/used/set/added.

As another example, the RLC entity (or RLC entity/MAC entity) associated with a cell having a different PCI from the serving cell associated with the inactive TCI state may be configured in an inactive state. When receiving the corresponding L1/L2 signaling, the corresponding L2 entity may be activated/configured/applied/used/set/added.

As described above, the LTM operation configuration indicated through RRC signaling may include one or more pieces of information among the LTM candidate/target cell configuration, the LTM radio bearer configuration, the L1L2 signaling configuration for the LTM operation, the execution indication information configuration for the LTM operation, the TCI state configuration for the LTM operation, and the execution condition/event configuration for the LTM operation.

The above-described information may indicate the L1L2 signaling configuration for the LTM operation, the execution indication information configuration for the LTM operation, the TCI state configuration for the LTM operation, the execution condition/event configuration for the LTM operation, and information for triggering/initiating/executing/applying the LTM operation. The configuration may include information for associating the configuration to the LTM candidate/target cell configuration and/or the LTM radio bearer configuration. One LTM candidate/target cell configuration may be configured to be mapped one-to-one with the corresponding configuration. Alternatively, one LTM candidate/target cell configuration may be configured to be mapped one-to-many with one or more corresponding configurations.

When the UE receives a handover command (RRC reconfiguration with sync) that does not include the LTM operation configuration (or for general handover, not for LTM operation) before the cell change/handover is triggered/initiated/executed/applied based on the L1L2 signaling/execution indication information/TCI state/execution condition/event/related procedure/operation, the UE may perform the handover procedure according to the received handover configuration (according to the standard specifications described in Section 38.300 9.2.3.2 of TS) regardless of any LTM operation configuration previously received. When the UE receives the command, when the UE successfully completes the random access procedure in the corresponding cell, when the UE successfully completes the handover, and when the UE sends an RRC reconfiguration complete message to the target cell, the UE may release/remove the stored LTM operation configuration/UE variable.

When the UE receives the RRC reconfiguration message including the LTM operation configuration before the cell change/handover is triggered/initiated/executed/applied based on the L1L2 signaling/execution indication information/TCI state/execution condition/event/related procedure/operation, part or all of the configurations included in the configuration may be replaced/modified/changed/reconfigured/stored/applied. For example, one or more pieces of information among the LTM candidate/target cell configuration, the LTM radio bearer configuration, the L1L2 signaling configuration for the LTM operation, the execution indication information configuration for the LTM operation, the TCI state configuration for the LTM operation, and the execution condition/event configuration for the LTM operation may be changed/modified through information for identifying the corresponding LTM operation configuration (or the detailed configuration included in the corresponding configuration).

When a handover command (RRC reconfiguration with sync) is received before the cell change/handover is triggered/started/executed/applied based on L1L2 signaling/execution indication information/TCI state/execution condition/event/related procedure/operation, the corresponding handover command (or corresponding RRC reconfiguration message) may include the LTM configuration for the LTM operation in the corresponding target cell. The UE may perform the handover procedure according to the received general handover configuration (according to the standard specifications described in Section TS 38.300 9.2.3.2). The UE may release/remove the LTM configuration/UE variable configured/stored in the source cell. The UE may store/apply the LTM operation configuration where the target cell performing the handover is the source cell/first TRP/cell associated with the first TRP/serving cell, and any cell having a PCI different from the corresponding cell is the target cell/candidate cell/second TRP/cell associated with the second TRP/non-serving cell. The cell change and the LTM operation configuration in the changed cell may be stored/applied through one RRC signaling message.

### User plane processing of L1/L2-based cell change (e.g., SpCell change or handover) process

As described above, when the L1/L2-based LTM operation is performed in the intra CU (Intra DU), it may be possible to transmit and receive data in the target cell by using/maintaining/reconfiguring the source cell configuration (or the part of the corresponding configuration). For example, the UE may continue receiving downlink user data in the source cell until a certain time according to the type of the LTM radio bearer. The corresponding time may be one or more among L1L2 signaling reception/event detection/procedure initiation/operation application (e.g., TCI state application time, application time indicated/configured by the base station, time/offset indicated/configured by the base station, LTM operation initiation determination, LTM operation application condition satisfaction, cell change trigger/initiation/execution/application) for the LTM operation, reception of LTM operation indication information from the lower layer, the first uplink grant indication timing for the target cell, downlink synchronization for the target cell (or after the synchronization), reception of PDCCH/uplink grant from the target cell, initiation of random access procedure to the target cell (or MSG1/MSGA transmission), successful random access procedure completion to the target cell, transmission of RRC reconfiguration complete message to the target cell, reception of acknowledgment/response information to RRC reconfiguration complete message transmission from the target cell, reception of indication information for releasing the source cell configuration (through RRC signaling message/MAC-CE/DCI), reception of source cell and/or source cell-associated radio bearer/L2 entity release/deactivate indication information from the base station, application/before application of source cell and/or source cell-associated radio bearer/L2 entity release/deactivate, initiation of any operation described in the disclosure, and completion of any operation described in the disclosure.

As another example, the UE may continue transmitting uplink user data to the source cell until a specific time. The corresponding time may be one or more among L1L2 signaling reception/event detection/procedure initiation/operation application (e.g., TCI state application time, application time indicated/configured by the base station, time/offset indicated/configured by the base station, LTM operation initiation determination, LTM operation application condition satisfaction, cell change trigger/initiation/execution/application) for the LTM operation, reception of LTM operation indication information from the lower layer, the first uplink grant indication timing for the target cell, downlink synchronization for the target cell (or after the synchronization), reception of PDCCH/uplink grant from the target cell, initiation of random access procedure to the target cell (or MSG1/MSGA transmission), successful random access procedure completion to the target cell, transmission of RRC reconfiguration complete message to the target cell, reception of acknowledgment/response information to RRC reconfiguration complete message transmission from the target cell, reception of indication information for releasing the source cell configuration (through RRC signaling message/MAC-CE/DCI), reception of source cell and/or source cell-associated radio bearer/L2 entity release/deactivate indication information from the base station, application/before application of source cell and/or source cell-associated radio bearer/L2 entity release/deactivate, initiation of any operation described in the disclosure, and completion of any operation described in the disclosure.

As another example, the UE may detach from the source cell at a specific time. The corresponding time may be one or more of the above-described times.

As another example, the UE may configure the target cell as a PCell at a specific time. The UE may update the security key to the corresponding cell. The corresponding time may be one or more of the above-described times. Alternatively, the UE may configure the target cell as a PCell when detaching from the source cell.

As another example, the UE may request uplink data/path switching/recovery from the PDCP entity for the radio bearer configured with the LTM radio bearer. The corresponding time may be one or more of the above-described times.

As another example, for a quick and simple LTM operation, the UE may perform the LTM operation using only the source PCell and the target PCell during the LTM operation. Alternatively, during the LTM operation, the UE may perform LTM cell change using only the source SCell and the target SCell. Alternatively, during the LTM operation, the UE may perform the LTM operation using only cells configurable as one cell group (e.g., MCG). For example, when the RRC configuration for the LTM operation is indicated, the base station may instruct the UE to release one or more of the CA, DC, SUL, CHO, DAPS, NR sidelink, and V2X sidelink. The UE may prevent the corresponding configuration from being applied until the handover is completed. As another example, when L1/L2 signaling for the LTM operation is received, one or more of CA, DC, SUL, CHO, DAPS, NR sidelink, and V2X sidelink may be released/suspended. As another example, when the cell change is triggered/initiated/executed/applied based on L1L2 signaling/execution indication information/TCI state/execution condition/event/related procedure/operation for the LTM operation, one or more of CA, DC, SUL, CHO, DAPS, NR sidelink, and V2X sidelink may be released/suspended.

According to the LTM radio bearer type, when the UE receives the LTM operation configuration through RRC, or when the UE triggers/initiates/executes/applies a cell change based on L1L2 signaling/execution indication information/TCI state/execution condition/event/related procedure/operation, the UE may perform one or more of the following operations.

The UE may not detach from the source cell. When the UE receives the explicit release from the base station/target cell/source cell, the UE may release the source resource.

The UE may stop/suspend downlink/uplink reception/transmission through the source cell.

The UE may maintain the SRB through the source cell. Until the LTM operation is triggered/initiated/executed based on the L1/L2 signaling/event/procedure/operation, and/or until explicit release is received from the base station/target cell/source cell, the UE may receive an RRC message through the corresponding signaling radio bearer. As another example, the UE may reconfigure/establish an L2 structure/radio bearer-type SRB (L2 entity for the SRB) as shown in FIGS. 10 to 13. Based on L1/L2 signaling/event/procedure/operation, until triggering/initiating/executing/applying the LTM operation and/or until explicit release is received from the base station/target cell/source cell, the UE may receive an RRC message through the corresponding signaling radio bearer.

As another example, the UE may suspend the SRB through the source cell. The UE may stop transmitting/receiving the RRC message through the source cell. The UE may configure an SRB for the target cell. The UE may configure the RLC entity for the target cell group with the same configuration as the RLC entity for the source cell group for the LTM operation. When the UE receives the source cell release indication from the target cell after the successful LTM operation is executed, the UE may release the source cell SRB. When the cell change to the target cell according to the LTM operation fails, if the source cell link is available, the UE may revert back to the source cell configuration). The UE may resume the source cell SRB.

As another example, when triggering/initiating/executing/applying the LTM operation based on L1/L2 signaling/event/procedure/operation, the UE may suspend the SRB through the source cell. The UE may stop transmitting/receiving the RRC message through the source cell. The UE may configure an SRB for the target cell. The UE may configure the RLC entity for the target cell group with the same configuration as the RLC entity for the source cell group for the LTM operation. The UE may establish a logical channel for the target cell group having the same configuration as the logical channel for the source cell group. The UE may transmit/receive an RRC message through the target cell. When the UE receives the source cell release indication from the target cell after the successful LTM operation is executed, the UE may release the source cell SRB. When the LTM operation to the target cell fails, if the source cell link is available, the UE may revert back to the source cell configuration). The UE may resume the source cell SRB.

As another example, the UE may suspend the SRB through the source cell at the corresponding time described above. The UE may stop transmitting/receiving the RRC message through the source cell. The UE may configure an SRB for the target cell. The UE may configure the RLC entity for the target cell group with the same configuration as the RLC entity for the source cell group for the LTM operation. The UE may establish a logical channel for the target cell group having the same configuration as the logical channel for the source cell group. The UE may transmit/receive an RRC message through the target cell. When the UE receives the source cell release indication from the target cell after the successful LTM operation is executed, the UE may release the source cell SRB. When the LTM operation to the target cell fails, if the source cell link is available, the UE may revert back to the source cell configuration). The UE may resume the source cell SRB.

The UE may generate/configure a MAC entity for the target cell. For example, in the L2 structure/radio bearer type as shown in FIG. 12 and FIG. 13, the UE may generate/configure a MAC entity for the target cell. The UE may generate the MAC entity for the target cell group with the same configuration as the MAC entity for the source cell group. For each radio bearer (e.g., DRB or SRB) configured in the corresponding structure/type, the UE may establish a DTCH/DCCH logical channel associated with the RLC entity for the target cell. The UE may configure the RLC entity for the target cell group with the same configuration as the RLC entity for the source cell group. The UE may establish a logical channel for the target cell group with the same configuration as the logical channel for the source cell group. As another example, the UE may maintain/reconfigure the MAC entity in the L2 structure/radio bearer type as shown in FIG. 10 and FIG. 11. For each radio bearer (e.g., DRB or SRB) configured in the corresponding structure/type, the UE may establish a DTCH/DCCH logical channel associated with the RLC entity for the target cell. In the corresponding MAC entity, the logical channel for the target cell of the corresponding radio bearer may be configured with a logical channel identity different from the logical channel for the source cell. The logical channel identity may have a general LCID value of 6 bits. Alternatively, the corresponding logical channel identity may have an extended logical channel ID (eLCID) value of 8 bits/16 bits. The logical channel mapping restrictions may be used so that the logical channel of the corresponding radio bearer may be transmitted separately from the source cell and the target cell in the corresponding MAC entity. Other than the LCID, the configuration for the source cell group may be configured with the same configuration as the configuration for the target cell group.

The remaining configurations for the source cell (e.g., one or more of the PDCP entity configuration included in the radio bearer configuration for the corresponding radio bearer, the special cell configuration (spCellConfig) included in the source cell group configuration, the RCL bearer configuration (rlc-BearerToAddModList), and the MAC cell group configuration (mac-CellGroupConfig)) may be kept/retained until the source cell is released.

When the UE receives the indication information for releasing the source cell configuration from the base station (or from the target cell) (through the RRC signaling message/MAC-CE/DCI), the UE may reset the source MAC. The UE may release the source MAC configuration. The UE may release the RLC entity for the source cell and the associated logical channel for the LTM radio bearer. The UE may release the PDCP entity, the RLC entity, and the associated logical channel for the source cell for the signaling radio bearer. The UE may release the physical channel configuration for the source cell.

For the PDCP entity, the corresponding base station CU may continue to allocate downlink PDCP SNs, and data forwarding between base stations is not required. Further, since the corresponding base station does not need security key refresh, cell change may be performed without security key refresh. However, in the cell change process according to the applied radio bearer structure, the PDCP entity may need to add and perform one or more operations of (in the case of the UE, uplink) data/path switching/recovery, duplicate transmission, PDCP re-establishment, PDCP data recovery, PDCP state report transmission, and data volume calculation for user data. To indicate this, the PDCP entity may be reconstructed.

For convenience of description, the operation for the UE to determine/change/switch the path/routing for uplink data in the LTM operation process is denoted as uplink data/path switching/recovery. This is merely for convenience of description and it may be replaced with any other term. When uplink data/path switching/recovery is requested from the PDCP entity for the radio bearer configured with the LTM radio bearer, the transmission PDCP entity may operate as follows.

For example, for AM DRBs, from the first PDCP SDU for which the successful delivery of the corresponding PDCP Data PDU has not been confirmed by the RLC entity associated with the source cell, the transmission PDCP entity performs retransmission or transmission of all the PDCP SDUs already associated with PDCP SNs in ascending order of the COUNT values associated to the PDCP SDU to the RLC entity associated with the target cell.

As another example, for UM DRBs, for all PDCP SDUs which have been processed by PDCP but which have not yet been submitted to lower layers, the transmission PDCP entity performs transmission of the PDCP SDUs in ascending order of the COUNT values to the RLC entity associated with the target cell.

As another example, for the AM radio bearer, the transmission PDCP entity performs retransmission/transmission in ascending order of the associated COUNT values to the RLC entity associated with the target cell, all PDCP data PDUs where successful transfer of the corresponding PDCP data PDU is not identified by the RLC entity associated with the source cell.

As another example, for the AM radio bearer, the transmission PDCP entity performs retransmission/transmission in ascending order of the associated COUNT values, all PDCP data PDUs where successful transfer of the corresponding PDCP data PDU is not identified by the RLC entity (stopped/suspended/reconfigured/released of the source cell according to the LTM operation) associated with the source cell.

As another example, for the AM radio bearer, the transmission PDCP entity performs retransmission/transmission in ascending order of the COUNT values associated with the PDCP SDU to the corresponding RLC entity, all PDCP SDUs already associated with the PDCP SNs, from the first PDCP SDU where successful transfer of the corresponding PDCP data PDU is not identified by the lower layer (e.g., RLC entity) (according to the LTM operation).

As another example, for the AM/UM radio bearer configured to send the PDCP state report on the uplink, when the higher layer requests uplink data/path switching/recovery, the reception PDCP entity may trigger the PDCP state report.

As another example, for the AM/UM radio bearer configured to send the PDCP state report on the uplink, when the higher layer reconfigures the PDCP entity to release the LTM radio bearer, the reception PDCP entity may trigger the PDCP state report.

As another example, for the AM/UM radio bearer configured to send the PDCP state report on the uplink, upon reception of indication information for releasing the source cell configuration (through RRC signaling message/MAC-CE/DCI), reception of source cell and/or source cell-associated radio bearer/L2 entity release/deactivate indication information from the base station, application of source cell and/or source cell-associated radio bearer/L2 entity release/deactivation, and reception of the corresponding indication/request information by the PDCP entity, the reception PDCP entity may trigger the PDCP state report.

As another example, the UE may configure/reconfigure the PDCP entity according to the received PDCP configuration information (PDCP-config). Until the LTM operation is successfully completed or while the LTM operation is running, the PDCP entity of the UE where the LTM operation is configured may keep/retain the corresponding PDCP function (e.g., security, ROHC header compression/decompression, reordering, duplicate detection and discard PDCP SDUs in-sequence delivery to upper layers. PDCP SN continuity, PDCP state variable (e.g., TX NEXT, RX NEXT, RX DELIV, RX REOR)).

As another example, if a general radio bearer is configured in the UE, the UE may perform MAC reset, RLC re-establishment, PDCP re-establishment/data recovery. While triggering/initiating/executing/applying the LTM operation based on the L1/L2 signaling/event/procedure/operation, the UE may suspend/stop data transmission/reception for the corresponding radio bearer in the source cell. When data transmission/reception is available through the target cell, the UE may initiate/start/perform/resume data transmission/reception through the corresponding radio bearer for the target cell.

As described above, the disclosure may reduce the delay in the cell change process by controlling mobility based on L1/L2 on the UE and effectively address a failure that occurs in the cell change process.

Hereinafter, configurations of a UE and a base station capable of performing all or part of the above-described embodiments of the disclosure will be described with reference to the drawings.

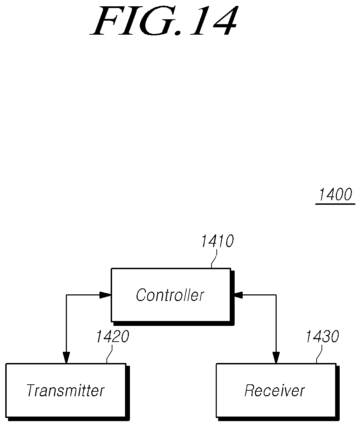

FIG. 14 is a block diagram illustrating a UE according to an embodiment.

Referring to FIG. 14, a UE 1400 performing a cell change operation may include a receiver 1430 receiving a higher layer message including one or more pieces of candidate target cell configuration information for an L1/L2-triggered mobility (LTM) operation and receiving a medium access control control element (MAC CE) indicating to perform the LTM operation to a target cell, and a controller 1410 controlling an operation of a timer included in the higher layer message.

According to an embodiment, the receiver 1430 may receive an RRC message including one or more candidate target cell configuration information from a base station or a TRP. The RRC message may include one or more pieces of candidate target cell configuration information, and each piece of candidate target cell configuration information may be separately included for each candidate target cell.

According to an embodiment, the upper layer message may include at least one of cell group configuration information, identification information about candidate target cell configuration information, bandwidth part identification information, and transmission configuration indication (TCI) state configuration information. The cell group configuration information includes information for configuring a cell group using two or more cells. The identification information for the candidate target cell configuration information may include ID or index information. Accordingly, the UE may distinguish each candidate target cell configuration information. The bandwidth part identification information may include an ID or an index for distinguishing the bandwidth part (BWP). The TCI state configuration information may include at least one of a TCI state ID, a cell index, a cell ID, and a physical cell identity (PCI).

Meanwhile, the candidate target cell configuration information includes information for performing L1 measurement on the serving cell or the candidate target cell and transmitting the L1 measurement result. For example, the controller 1410 controls the operation of measuring the channel state for the serving cell or the candidate target cell using the candidate target cell configuration information. The transmitter 1420 transmits the measured channel state or channel quality information to the base station based on the information for transmission of the measurement result included in the candidate target cell configuration information. For example, the transmitter 1420 may transmit the measurement result to the base station based on the information for transmission of the measurement result included in the candidate target cell configuration information. For example, when a condition for triggering transmission of the measurement result is met, the transmitter 1420 may transmit the measurement result of the corresponding serving cell or the candidate target cell to the base station. As another example, the transmission of the L1 measurement result is triggered when the measurement result of the candidate target cell is of a quality higher than a value obtained by adding or subtracting an offset to/from the measurement result of the source PSCell.

Further, the receiver 1430 may receive instruction information instructing to perform the LTM operation included in the MAC CE. As another example, the receiver 1430 may identify information about the target cell included in the MAC CE and receive an LTM operation execution instruction to the target cell. Through the MAC CE, the controller 1410 should obtain information about the target cell to instruct to perform an LTM operation and to perform the cell change. To that end, the MAC CE may include at least one of identification information for candidate target cell configuration information, the TCI state ID, bandwidth part identification information, and the timing advance command. For example, the MAC CE may include identification information for distinguishing candidate target cell configuration information configured in the UE through the higher layer message. The identification information may include candidate target cell configuration information ID or index information. Further, the MAC CE may include at least one of the TCI state ID, the bandwidth part ID, and the TAG.

Further, when the MAC CE is received, the controller 1410 may identify the target cell to perform cell change based on the corresponding MAC CE. For example, the controller 1410 identifies identification information about the candidate target cell configuration information included in the MAC CE and identifies the candidate target cell configuration information allocated as the corresponding identification information and received through the higher layer message. The candidate target cell to which the corresponding candidate target cell configuration information is applied may be the target cell to be changed. In other words, the identification information allocated to the one or more candidate target cell configuration information received through the higher layer message and the identification information allocated to the candidate target cell configuration information received through the MAC CE may be the same. Accordingly, the controller 1410 may identify the target cell through the MAC CE.

When the target cell is identified, the controller 1410 applies the candidate target cell configuration information applied to the target cell to the UE. Further, the controller 1410 performs a cell change operation to the target cell using the candidate target cell configuration information about the target cell without performing the RRC reconfiguration operation.

According to an embodiment, the controller 1410 may control an operation of a timer included in a higher layer message in a cell change operation process.

According to an embodiment, the timer may be initiated when receiving the MAC CE or when applying candidate target cell configuration information associated with the target cell. For example, the controller 1410 may start the timer included in the higher layer message if the MAC CE is received. Alternatively, the controller 1410 may identify the target cell indicated by the MAC CE and, when applying the candidate target cell configuration information associated with the target cell, start the timer.

According to another embodiment, the timer may be stopped when random access to the target cell is successfully completed or when transmitting or receiving complete indication information about a cell change to the target cell. For example, the controller 1410 may perform an LTM operation by the MAC CE, performing a random access operation to the target cell. If the UE completes the random access procedure to the target cell, the controller 1410 may stop the timer. Alternatively, the controller 1410 may stop the timer when the UE completes the cell change to the target cell according to the LTM operation to transmit complete indication information indicating the cell change completion to the source cell or the target cell. Alternatively, the controller 1410 may stop the timer when the UE completes the cell change to the target cell according to the LTM operation and receives complete indication information indicating the cell change completion from the source cell or the target cell.

Meanwhile, the UE may receive the MAC CE to initiate the timer and perform a cell change procedure according to the LTM operation, and the timer may expire for any reason before the cell change is completed.

For example, the controller 1410 may perform at least one of an operation of applying a UE configuration used in a source cell, an operation of releasing random access configuration information, a MAC reset operation, an RRC reconfiguration procedure initiation operation, a failure information setting operation, and a failure information transmission operation, if the timer is initiated and then expires. For example, if the timer expires before the cell change completion, the controller 1410 may re-apply the configuration of the source cell to the UE according to a failure in cell change to the source cell. As another example, in this case, the controller 1410 may release the configuration information for random access to the target cell. As another example, the controller 1410 may perform the operation of resetting the MAC configured for the target cell. As another example, the controller 1410 may initiate the RRC reconfiguration procedure to remove the cause of cell change failure. As another example, the controller 1410 may set failure information related to the cell change failure, and the transmitter 1420 may perform the operation of transmitting failure information to the base station.

Meanwhile, the controller 1410 may perform the operation of radio link monitoring and whether beam failure occurs for the source cell before receiving the MAC CE from the base station. In other words, the controller 1410 stores, in the UE, one or more pieces of candidate target cell configuration information included in the higher layer message and performs a radio link monitoring or beam failure detection operation of the source cell before the MAC CE is received. This may be associated with the above-described L1 measurement result transmission operation.

Alternatively, the controller 1410 may perform the operation of radio link monitoring and whether beam failure occurs for the target cell after receiving the MAC CE from the base station. In other words, the controller 1410 may receive the MAC CE to perform the cell change operation to the target cell and may monitor the radio link on the target cell and detect whether a beam failure occurs.

If the radio link monitoring result of the target cell has a problem in the cell change process or if a beam failure occurs so that the cell change is not completed until before the timer expires, the above-described operation according to timer expiration may be performed to perform re-access to the source cell.

Further, the transmitter 1420 and the receiver 1430 are used to transmit or receive signals or messages or data necessary for performing the above-described embodiments, with the base station. Further, the controller 1410 controls the overall operation of the UE 1400 required to perform the above-described embodiments.

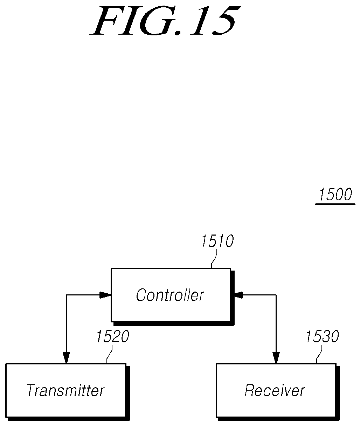

FIG. 15 is a block diagram illustrating a base station according to an embodiment.

Referring to FIG. 15, a base station 1500 performing a cell change operation of a UE may include a transmitter 1520 transmitting, to the UE, a higher layer message including one or more pieces of candidate target cell configuration information for an L1/L2-triggered mobility (LTM) operation, and a controller 1510 determining to perform an LTM operation on a target cell based on an L1 measurement result. Further, the transmitter 1520 may further transmit, to the UE, a medium access control element (MAC CE) indicating to perform an LTM operation to the target cell. Here, when the MAC CE is received, the UE may control the operation of the timer included in the higher layer message.

For example, the transmitter 1520 may transmit an RRC message including one or more pieces of candidate target cell configuration information to the UE. The RRC message may include one or more pieces of candidate target cell configuration information, and each piece of candidate target cell configuration information may be separately included for each candidate target cell. For example, the upper layer message may include at least one of cell group configuration information, identification information about candidate target cell configuration information, bandwidth part identification information, and transmission configuration indication (TCI) state configuration information. The cell group configuration information includes information for configuring a cell group using two or more cells. The identification information for the candidate target cell configuration information may include ID or index information. Accordingly, the UE may distinguish each candidate target cell configuration information. The bandwidth part identification information may include an ID or an index for distinguishing the bandwidth part (BWP). The TCI state configuration information may include at least one of a TCI state ID, a cell index, a cell ID, and a physical cell identity (PCI).

Meanwhile, the candidate target cell configuration information includes information for performing L1 measurement on the serving cell or the candidate target cell and transmitting the L1 measurement result. For example, the LTE measures the channel state for the serving cell or the candidate target cell using the candidate target cell configuration information. The UE transmits the measured channel state or channel quality information to the base station based on the information for transmission of the measurement result included in the candidate target cell configuration information. To that end, information for measurement reporting may be included in the candidate target cell configuration information.

The receiver 1530 receives the measurement result report that includes the L1 measurement result transmitted by the UE. For example, the UE may transmit the measurement result to the base station 1500 based on the information for transmission of the measurement result included in the candidate target cell configuration information. For example, when a condition for triggering transmission of the measurement result is met, the UE may transmit the measurement result of the corresponding serving cell or the candidate target cell to the base station. As another example, the transmission of the L1 measurement result is triggered when the measurement result of the candidate target cell is of a quality higher than a value obtained by adding or subtracting an offset to/from the measurement result of the source PSCell.

Further, the controller 1510 may determine whether to perform the LTM operation based on the L1 measurement result information of the UE. As another example, the controller 1510 may determine the target cell to be changed through the LTM operation based on the L1 measurement result information of the UE. As such, the controller 1510 may perform an LTM operation on the UE and determine a target cell to be changed by the UE based on the L1 measurement result received from the UE.

When the base station determines to change the cell of the corresponding UE based on the L1 measurement result information received from the UE, the transmitter 1520 may indicate the same through the MAC CE.

For example, the transmitter 1520 may include instruction information to instruct to perform the LTM operation in the MAC CE and transmit the same. As another example, the transmitter 1520 may include information about the target cell in the MAC CE and transmit the same.

Through the MAC CE, the UE may obtain information about the target cell to instruct to perform an LTM operation and to perform the cell change. For example, the MAC CE may include at least one of identification information for candidate target cell configuration information, the TCI state ID, bandwidth part identification information, and the timing advance command. For example, the MAC CE may include identification information for distinguishing candidate target cell configuration information configured in the UE through the higher layer message.

For example, when the MAC CE is received, the UE may identify the target cell to perform cell change based on the corresponding MAC CE. For example, the UE identifies identification information about the candidate target cell configuration information included in the MAC CE and identifies the candidate target cell configuration information allocated as the corresponding identification information and received through the higher layer message. The candidate target cell to which the corresponding candidate target cell configuration information is applied may be the target cell to be changed. When the target cell is identified, the UE applies the candidate target cell configuration information applied to the target cell to the UE. Further, the UE performs a cell change operation to the target cell using the candidate target cell configuration information about the target cell without performing the RRC reconfiguration operation.

According to an embodiment, the UE may control an operation of a timer included in a higher layer message in a cell change operation process.

According to an embodiment, the timer may be initiated when receiving the MAC CE or when applying candidate target cell configuration information associated with the target cell. For example, the UE may start the timer included in the higher layer message if the MAC CE is received. Alternatively, the UE may identify the target cell indicated by the MAC CE and, when applying the candidate target cell configuration information associated with the target cell, start the timer.

According to another embodiment, the timer may be stopped when random access to the target cell is successfully completed or when transmitting or receiving complete indication information about a cell change to the target cell. For example, the UE may perform an LTM operation by the MAC CE, performing a random access operation to the target cell. If the UE completes the random access procedure to the target cell, the UE may stop the timer. Alternatively, the UE may stop the timer when the UE completes the cell change to the target cell according to the LTM operation to transmit complete indication information indicating the cell change completion to the source cell or the target cell. Alternatively, the UE may stop the timer when the UE completes the cell change to the target cell according to the LTM operation and receives complete indication information indicating the cell change completion from the source cell or the target cell.

Meanwhile, the UE may receive the MAC CE to initiate the timer and perform a cell change procedure according to the LTM operation, and the timer may expire for any reason before the cell change is completed.

For example, the UE may perform at least one of an operation of applying a UE configuration used in a source cell, an operation of releasing random access configuration information, a MAC reset operation, an RRC reconfiguration procedure initiation operation, a failure information setting operation, and a failure information transmission operation, if the timer is initiated and then expires. For example, if the timer expires before the cell change completion, the UE may re-apply the configuration of the source cell to the UE according to a failure in cell change to the source cell. As another example, in this case, the UE may release the configuration information for random access to the target cell. As another example, the UE may perform the operation of resetting the MAC configured for the target cell. As another example, the UE may initiate the RRC reconfiguration procedure to remove the cause of cell change failure. As another example, the UE may set failure information related to the cell change failure and may perform the operation of transmitting failure information to the base station.

Meanwhile, the UE may perform the operation of radio link monitoring and whether beam failure occurs for the source cell before receiving the MAC CE from the base station. In other words, the UE stores, in the UE, one or more pieces of candidate target cell configuration information included in the higher layer message and performs a radio link monitoring or beam failure detection operation of the source cell before the MAC CE is received. This may be associated with the above-described L1 measurement result transmission operation.

Alternatively, the UE may perform the operation of radio link monitoring and whether beam failure occurs for the target cell after receiving the MAC CE from the base station. In other words, the UE may receive the MAC CE to perform the cell change operation to the target cell and may monitor the radio link on the target cell and detect whether a beam failure occurs.

If the radio link monitoring result of the target cell has a problem in the cell change process or if a beam failure occurs so that the cell change is not completed until before the timer expires, the above-described operation according to timer expiration may be performed to perform re-access to the source cell.

According to the above-described operations, the UE may prevent communication drops even when a failure occurs in the cell change process according to an LTM operation, thereby providing a seamless service.

The embodiments described above may be supported by the standard documents disclosed in at least one of the radio access systems such as IEEE 802, 3GPP, and 3GPP2. That is, the steps, configurations, and parts, which have not been described in the present embodiments, may be supported by the above-mentioned standard documents for clarifying the technical concept of the disclosure. In addition, all terms disclosed herein may be described by the standard documents set forth above.

The above-described embodiments may be implemented by any of various means. For example, the present embodiments may be implemented as hardware, firmware, software, or a combination thereof.

In the case of implementation by hardware, the method according to the present embodiments may be implemented as at least one of an application specific integrated circuit (ASIC), a digital signal processor (DSP), a digital signal processing device (DSPD), a programmable logic device (PLD), a field programmable gate array (FPGA), a processor, a controller, a microcontroller, or a microprocessor.

In the case of implementation by firmware or software, the method according to the present embodiments may be implemented in the form of an apparatus, a procedure, or a function for performing the functions or operations described above. Software code may be stored in a memory unit, and may be driven by the processor. The memory unit may be provided inside or outside the processor, and may exchange data with the processor by any of various well-known means.

In addition, the terms "system", "processor", "controller", "component", "module", "interface", "model", "unit", and the like may generally mean computer-related entity hardware, a combination of hardware and software, software, or running software. For example, the above-described components may be, but are not limited to, a process driven by a processor, a processor, a controller, a control processor, an entity, an execution thread, a program and/or a computer. For example, both the application that is running in a controller or a processor and the controller or the processor may be components. One or more components may be provided in a process and/or an execution thread, and the components may be provided in a single device (e.g., a system, a computing device, etc.), or may be distributed over two or more devices.

The above embodiments of the present disclosure have been described only for illustrative purposes, and those skilled in the art will appreciate that various modifications and changes may be made thereto without departing from the scope and spirit of the disclosure. Further, the embodiments of the disclosure are not intended to limit, but are intended to illustrate the technical idea of the disclosure, and therefore the scope of the technical idea of the disclosure is not limited by these embodiments. The scope of the present disclosure shall be construed on the basis of the accompanying claims in such a manner that all of the technical ideas included within the scope equivalent to the claims belong to the present disclosure.

### CROSS-REFERENCE TO RELATED APPLICATION

This application claims priority to Korean Patent Application Nos. 10-2022-0000504 filed on January 3, 2022, and 10-2022-0185179 filed on December 27, 2022 in the Korean Intellectual Property Office, the disclosures of which are incorporated by reference herein in their entireties.

## Claims

1. A method for performing a cell change operation by a user equipment (UE), the method comprising:
receiving a higher layer message including one or more pieces of candidate target cell configuration information for an L1/L2-triggered mobility (LTM) operation;
receiving a medium access control control element (MAC CE) indicating to perform the LTM operation to a target cell; and
controlling an operation of a timer included in the higher layer message.

2. The method of claim 1, further comprising before receiving the MAC CE, performing a radio link monitoring and beam failure detection operation on a source cell.

3. The method of claim 1, further comprising after receiving the MAC CE, performing a radio link monitoring and beam failure detection operation on the target cell.

4. The method of claim 1, wherein the timer is initiated when receiving the MAC CE or when applying the candidate target cell configuration information associated with the target cell.

5. The method of claim 1, wherein the timer is stopped when random access to the target cell is successfully completed or when transmitting or receiving complete indication information about a cell change to the target cell.

6. The method of claim 1, further comprising, if the timer is initiated and then expires, performing at least one of an operation of applying a UE configuration used in a source cell, an operation of releasing random access configuration information, a MAC reset operation, an RRC reconfiguration procedure initiation operation, a failure information setting operation, and a failure information transmission operation.

7. A method for controlling a cell change operation of a UE by a base station, the method comprising:
transmitting, to the UE, a higher layer message including one or more pieces of candidate target cell configuration information for an L1/L2-triggered mobility (LTM) operation;
determining to perform the LTM operation on a target cell based on an L1 measurement result; and
transmitting, to a medium access control control element (MAC CE) indicating to perform the LTM operation to the target cell, wherein the UE
controls a timer included in the higher layer message if the MAC CE is received.

8. The method of claim 7, wherein the timer is initiated when receiving the MAC CE or when applying the candidate target cell configuration information associated with the target cell.

9. The method of claim 7, wherein the timer is stopped when random access to the target cell is successfully completed or when transmitting or receiving complete indication information about a cell change to the target cell.

10. The method of claim 7, wherein the UE performs at least one of an operation of applying a UE configuration used in a source cell, an operation of releasing random access configuration information, a MAC reset operation, an RRC reconfiguration procedure initiation operation, a failure information setting operation, and a failure information transmission operation, if the timer is initiated and then expires.

11. A UE performing a cell change operation, comprising:
a receiver receiving a higher layer message including one or more pieces of candidate target cell configuration information for an L1/L2-triggered mobility (LTM) operation and receiving a medium access control control element (MAC CE) indicating to perform the LTM operation to a target cell; and
a controller controlling an operation of a timer included in the higher layer message.

12. The UE of claim 11, wherein the controller performs a radio link monitoring and beam failure detection operation on a source cell before receiving the MAC CE.

13. The UE of claim 11, wherein the controller performs a radio link monitoring and beam failure detection operation on the target cell after receiving the MAC CE.

14. The UE of claim 11, wherein the timer is initiated when receiving the MAC CE or when applying the candidate target cell configuration information associated with the target cell.

15. The UE of claim 11, wherein the timer is stopped when random access to the target cell is successfully completed or when transmitting or receiving complete indication information about a cell change to the target cell.

16. The UE of claim 11, wherein the controller performs at least one of an operation of applying a UE configuration used in a source cell, an operation of releasing random access configuration information, a MAC reset operation, an RRC reconfiguration procedure initiation operation, a failure information setting operation, and a failure information transmission operation, if the timer is initiated and then expires.
